# EUROPÄISCHE PATENTSCHRIFT

(11) **EP 3 771 526 B1**
(45) Veröffentlichungstag und Bekanntmachung des Hinweises auf die Patenterteilung: **30.11.2022**
(21) Anmeldenummer: 19405012.6
(22) Anmeldetag: 30.07.2019
(51) Int. Cl.: B25J 19/06, B01L 1/04, B25J 21/02, G21F 7/04

(54) **HANDSCHUHVORRICHTUNG ZUM GESCHÜTZTEN EINGRIFF IN EIN CONTAINMENT**
GLOVE DEVICE FOR PROTECTED INTERVENTION IN A CONTAINMENT
DISPOSITIF FORMANT UN GANT DESTINÉ À L'INTERVENTION PROTÉGÉE DANS UNE ENCEINTE DE CONFINEMENT

(43) Veröffentlichungstag der Anmeldung: 03.02.2021
(73) Patentinhaber: SKAN AG, 4123 Allschwil (CH)
(72) Erfinder: GEISER, Christoph Joschi, 4313 Möhlin (CH); LEHMANN, Frank Martin, 4102 Binningen (CH)
(74) Vertreter: Ullrich, Gerhard

(56) Entgegenhaltungen:
- WO-A1-2018/108956
- DE-C1- 3 616 893
- FR-A- 1 147 608
- JP-A- H 094 897
- JP-A- H0 270 009
- JP-A- H01 223 397
- US-A1- 2005 269 916
- US-A1- 2012 267 367
- US-A1- 2015 243 392

## Beschreibung

### Anwendungsgebiet der Erfindung

Die vorliegende Erfindung betrifft eine Handschuhvorrichtung mit einem Handschuh zum geschützten Eingriff durch einen in einem Portflansch vorhandenen Zugang in eine Arbeitskammer eines Containments. Der Portflansch ist in einer Frontscheibe oder in einer Wandung eines Gehäuses des in einem Aufstellraum positionierten Containments eingebaut. Meistens befindet sich in der Arbeitskammer eine Maschinerie zur Bearbeitung von Behandlungsgut, z.B. Pharmazeutika oder biotechnische Substanzen. In Verbindung mit der Handschuhvorrichtung wird eine Anordnung zum Schutz gegen unautorisierten Eingriff in die Arbeitskammer mit dem Handschuh aus der Handschuhvorrichtung mittels eines Absperrteils zur temporären Blockierung des Zugangs vorgeschlagen.

### Stand der Technik

Zum Beispiel die Jung Gummitechnik GmbH, D-64683 Einhausen/Deutschland, offeriert auf ihrer Internetseite (siehe https://jugitec.de/; Internetauszug vom 25.07.2019) ein Programm von Glovebox-Handschuhen, u.a. deren Jugitec^{®} Pharma, ein Handschuh aus Ethylen-Propylen-Dien-Kautschuk (EPDM). Beworben wird dieser an sich herkömmliche Handschuh mit gutem Tastempfinden, Konformität der Inhaltsstoffe mit der FDA-Positivliste, geltend für Kriterien des pharmazeutischen, medizinischen und des Lebensmittelmarktes, mit der Eignung für Ex-Anwendungen und guter Dampfsterilisierbarkeit.

Die US 2005/0 269 916 A1 offenbart eine Glove-box zum Anschluss an einen einem Portflansch mit seinem Zugang in ein Containment nahe dem Prinzip des Oberbegriffs von Anspruch 1. Gegenstand der JP H01 223397 A ist eine Handschuhvorrichtung mit in einem kartuschenartigen Gehäuse untergebrachten Handschuh, der zum Eingriff durch einen Port in ein Containment bestimmt ist. Im unbenutzten Zustand liegt der Handschuh zwischen einem inneren und einem äusseren Verschluss, die sich beide entfernen lassen. Zweck der Vorrichtung ist, eine zu plötzliche Ausdehnung des Handschuhs und somit Beschädigung zu vermeiden, wenn innere Verschluss geöffnet wird. Die US 2015/0 243 392 A1 betrifft eine Handschuhwechseleinrichtung mit elektronischer Überwachung. Aus der WO 2018/108956 A1 ist eine Arbeitskammer mit Handschuheingriffen zur Behandlung sensibler oder toxischer Artikel bekannt. Eine Steuereinrichtung dient der Aufrechterhaltung eines definierten Unterdrucks in der Arbeitskammer. Eine weitere Glove-box, in der vorzugsweise mehrere Handschuhe angeordnet sein können, ist aus der FR 1 147 608 A bekannt.

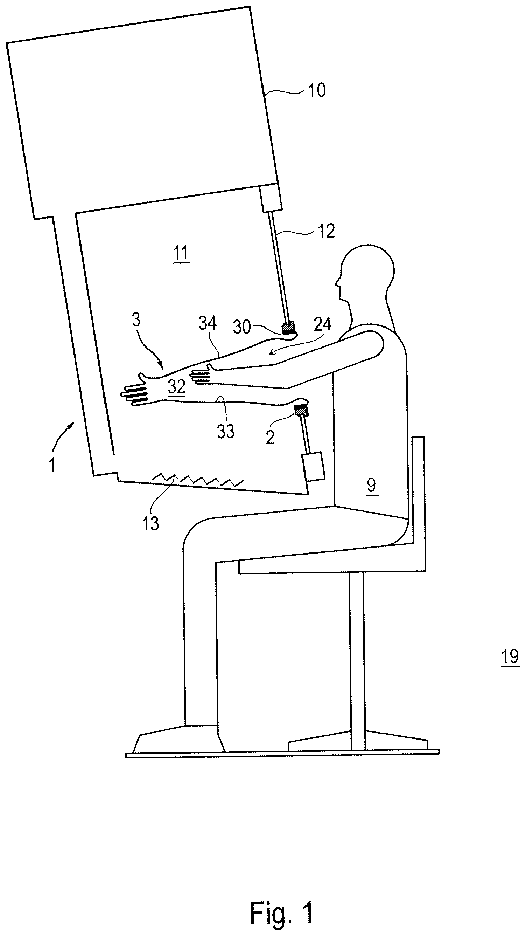

Gemäss Stand der Technik (siehe Figur 1) baut man in die Portflansche **2** von Containments **1**, die in einem Aufstellraum **19** stehen, solche herkömmlichen Handschuhe **3** ein. Dabei wird die Stulpe **30** des Handschuhs **3** über einen zumeist ausbaubaren Ring gezogen und üblicherweise mit O-Ringen gegen den in der Frontscheibe **12** oder einer Wandung des Containmentgehäuses **10** installierten Portflansch **2** abgedichtet. Somit entsteht ein Zugang **24** in die Arbeitskammer **11** des Containments **1.** Am von einem Bediener **9** in die Arbeitskammer **11** vor-gestrecktem Handschuh **3** sind dessen Innenfläche **33** und die Aussenfläche **34** sowie der vom Handschuh **3** gebildete Innenraum **32** bezeichnet.

Zur Vorbereitung für den Start des Produktionsmodus' am Containment **1** ist bereits eine Kontrolle des Handschuhs **3** auf Dichtheit - mittels Prüfgerätschaft - zwingend vorgeschrieben, was am Standort, z.B. beim Pharmaproduzenten, zusätzliches Equipment und Zeit erfordert. Ferner muss die komplette, der Arbeitskammer **11** zugewandte Aussenfläche **34** des Handschuhs **3** zusammen mit dem Containment **1** dekontaminiert werden. Hierzu werden in der Regel sogenannte Handschuhstrecker (siehe z.B. von der Anmelderin stammend CH 707 655 A1) in den Handschuh **3** eingeführt, um durch das Aufspannen mit der z.B. angewendeten H₂O₂-Begasung alle Flächenareale mit ausreichender Intensität zu behandeln. Aufgrund der grossen und stark geformten Aussenfläche **34** bedarf es einer entsprechend langen Dekontaminationszeit. Insbesondere bei aseptisch oder toxisch betriebenen Containments **1** sind häufige Dekontaminationen bzw. Reinigungen nötig, dies dann oftmals mit dem Erfordernis, ganz neue Handschuhe **3** einzubauen, so dass sich der zuvor beschriebene Aufwand wiederholt. Im gezeigten Beispiel und wie zumeist, ist der Arbeitskammer **11** eine Maschinerie **13** zur Bearbeitung von Behandlungsgütern vorhanden.

### Aufgabe der Erfindung

Ausgehend vom vorbekannten Stand der Technik liegt der Erfindung die Aufgabe zugrunde, eine Lösung vorzuschlagen, um den Aufwand vor dem Gebrauch des Handschuhs am Standort des damit ausgestatteten Containments, z.B. beim Pharmaproduzenten, deutlich zu verringern. Ferner soll darauf abgezielt werden, einen Handschuh bereitzustellen, der anstatt einer Oberflächendekontamination, z.B. mittels H₂O₂-Begasung, eine höherwertige Thermal- oder Gamma-Sterilisation erhalten hat.

Eine zusätzliche Aufgabe besteht darin, die zu schaffende Lösung mit Schutzmassnahmen zu komplettieren, um den unautorisierten Eingriff mit dem Handschuh in die Arbeitskammer durch den im Portflansch vorhandenen Zugang mittels eines Absperrteils auszuschliessen.

Hierbei ist davon auszugehen, dass das Containment zumeist eine Vielzahl an Portflanschen besitzt, die alle jeweils mit einem Handschuh zu versehen sind. Damit soll erreicht werden, nicht autorisierte Eingriffe von Bedienern, als "uncontrolled human interventions" zu verhindern und so insbesondere die Produktion von Pharmazeutika verlustfreier und sicherer zu machen und eine allumfassende Protokollierung sämtlicher Handlungen am Portflansch zu gewährleisten.

### Übersicht über die Erfindung

Die Handschuhvorrichtung mit einem Handschuh ist zum geschützten Eingriff durch einen in einem Portflansch vorhandenen Zugang in eine Arbeitskammer eines Containments vorgesehen. Der Portflansch ist in einer Frontscheibe oder in einer Wandung eines Gehäuses des in einem Aufstellraum positionierten Containments eingebaut. In der Arbeitskammer kann eine Maschinerie zur Bearbeitung eines Behandlungsguts vorhanden sein. Die Handschuhvorrichtung ist als eine in den Portflansch gasdicht einsetzbare Baugruppe in Gestalt eines Einsatzes ausgebildet. Einerseits ist eine entfernbare bzw. zu öffnende Versiegelung angeordnet und andererseits ein Abdeckteil oder ein Absperrteil, welches von der Baugruppe lösbar ist. Zwischen beiden befindet sich vakuumiert verpackt der Handschuh, der eine Innenfläche und eine Oberfläche besitzt.

Die Handschuhvorrichtung weist ferner ein Fixierteil auf, welches zur gasdichten Befestigung am Portflansch bestimmt ist. Das Fixierteil ist ringförmig oder oval ausgebildet und besteht vorzugsweise aus Kunststoff. Das Abdeckteil bzw. das Absperrteil ist vorzugsweise schalenartig ausgebildet und besteht vorzugsweise ebenfalls aus Kunststoff.

Bei auf der Handschuhvorrichtung aufsitzendem Abdeckteil oder Absperrteil und im Zustand der unversehrten Versiegelung liegt zwischen der Versiegelung und der Oberfläche ein Frontraum, in dem ein Unterdruck herrscht. Der Frontraum sowie die diesem zugewandte Innenfläche der Versiegelung und die Oberfläche des Handschuhs sind steril.

Bei auf der Handschuhvorrichtung aufsitzendem Abdeckteil oder Absperrteil und im Zustand der unversehrten Versiegelung liegt zwischen der Innenfläche des Handschuhs und dem Abdeckteil bzw. Absperrteil ein Innenraum, in dem ein Unterdruck herrscht. Der Innenraum sowie die diesem zugewandte Innenfläche des Abdeckteils oder des Absperrteils und die Innenfläche des Handschuhs sind steril.

Das an sich freie Ende des Handschuhs ist am Fixierteil und/oder nahe dem Fixierteil an der Versiegelung befestigt ist, wobei die Versiegelung die lichte Weite des Fixierteils zumindest im Wesentlichen überspannt. Bei auf dem Handschuhvorrichtung aufsitzendem Absperrteil bzw. Abdeckteil, und im Zustand intakter Versiegelung, ist die Versiegelung visuell erkennbar konkav zur Handschuhvorrichtung, infolge des darin herrschenden Unterdrucks, gekrümmt.

Im Fixierteil ist ein RFID-Chip angeordnet, welcher eine individuelle Seriennummer und vorzugsweise zusätzlich seine Herstellungsdaten abgespeichert hat. Vorzugsweise ist der RFID-Chip beschreibbar und alle neuen Handlungen an der Handschuhvorrichtung, einschliesslich am Handschuh, werden erfasst und im RFID-Chip oder in der Steuereinheit den individuellen Lebenslaufdaten der Handschuhvorrichtung hinzugefügt.

Das als integraler Bestandteil der Handschuhvorrichtung davon lösbar beschaffene Absperrteil ist zum Schutz gegen unautorisierten Eingriff mit dem Handschuh durch den im Portflansch vorhandenen Zugang in die Arbeitskammer des Containments nutzbar. Oder zum Schutz gegen solchen unautorisierten Eingriff ist ein Absperrteil vorgesehen, welches als direkt in den Portflansch integrierter, schwenkbarer, aufspannbarer, jalousieartiger oder expandierbarer Verschlusskörper ausgebildet ist, oder als separater an den Portflansch andockbarer bzw. davon entfernbarer Verschlusskörper beschaffen ist. Das als integraler Bestandteil der Handschuhvorrichtung davon lösbar beschaffene Absperrteil besitzt einen Fortsatz, der zum Zusammenwirken mit einem sich vom Portflansch erstreckenden schaltbaren Halteelement bestimmt ist, um das Absperrteil zusätzlich am Portflansch temporär zu sichern.

Das Abdeckteil bzw. das Absperrteil besitzt eine Magnetzone, die zum Zusammenwirken mit dem Fixierteil bestimmt ist, um das Abdeckteil bzw. das Absperrteil temporär zusätzlich zu sichern. Die Magnetzone ist ferner dazu nutzbar, wenn das Abdeckteil bzw. das Absperrteil von der Handschuhvorrichtung gelöst ist, um dieses an einer Parkstation zu deponieren.

Bei einer Vielzahl am Containment installierter Portflanschen ist jeweils eine Handschuhvorrichtung am jeweiligen Portflansch befestigt.

Zur Aufnahme von Personaldaten eines Bedieners ist eine Erfassungseinheit vorgesehen, die eine Verbindung zu einem Microcontroller besitzt, um bei Korrespondenz zwischen den erfassten Personaldaten und den Daten im Microcontroller an einen Aktivator einen Schaltbefehl zu erteilen, wodurch sich das Absperrteil in eine Blockierposition bringen bzw. daraus in eine Offenposition bewegen lässt und somit der Zugang gesperrt bzw. zugänglich ist. Der Aktivator ist am Portflansch oder am Absperrteil angeordnet. Die Daten des Microcontrollers sind direkt darin hinterlegt oder stammen von einer externen Steuereinheit.

Die Erfassungseinheit zur Aufnahme von Personaldaten des Bedieners ist dem jeweiligen Portflansch oder dem jeweiligen Absperrteil zugeordnet. Bei Korrespondenz zwischen den erfassten Personaldaten und den Daten im Microcontroller erhält der Bediener per Schaltbefehl vom Microcontroller die Autorisation, dieses bestimmte Absperrteil an diesem bestimmten Portflansch aufzusetzen und in die Blockierposition bringen bzw. zu entriegeln und von diesem bestimmten Portflansch abzunehmen, wodurch der Zugang gesperrt bzw. zugänglich ist.

Die Erfassungseinheit zur Aufnahme von Personaldaten des Bedieners kann direkt im jeweiligen Portflansch oder im jeweiligen Absperrteil vorhanden sein. Alternativ ist die Erfassungseinheit für sämtliche betroffenen Portflansche und Absperrteile des Containments in einem mobilen Gerät eingerichtet, z.B. in einem Tabletcomputer.

Das Absperrteil, in der Konfiguration als im Portflansch integrierter Verschlusskörper, und der Portflansch sind jeweils mit einem Sicherheitssensor versehen. Die beiden Paare von Sicherheitssensoren dienen dazu, im Zusammenwirken mit einem externen Sicherheitsrelais, die Stellung des Absperrteils im Portflansch zu erfassen und bei offenstehendem Absperrteil ein automatisches Blockieren der Maschinerie zu schalten.

Oder das Absperrteil, in der Konfiguration als separater an den Portflansch andockbarer bzw. davon entfernbarer Verschlusskörper, und der Portflansch sind jeweils mit einem Sicherheitssensor versehen. Die beiden Sicherheitssensoren dienen dann dazu, im Zusammenwirken mit einem externen Sicherheitsrelais, die Stellung des Absperrteils in Relation zum Portflansch zu erfassen und bei Distanzierung des Absperrteils vom Portflansch ein automatisches Blockieren der Maschinerie zu schalten.

Oder das Absperrteil, in der Konfiguration als mit der Handschuhvorrichtung lösbar verbundener Verschlusskörper, der am Portflansch verriegelbar bzw. davon abnehmbar ist, und der Portflansch sind jeweils mit einem Sicherheitssensor versehen. Auch in diesem Fall dienen die beiden Paare von Sicherheitssensoren dazu, im Zusammenwirken mit einem externen Sicherheitsrelais, die Stellung des Absperrteils in Relation zum Portflansch zu erfassen und bei Distanzierung des Absperrteils vom Portflansch ein automatisches Blockieren der Maschinerie zu schalten.

Der Steuereinheit und dem damit jeweils pro Portflansch zusammenwirkenden Sicherheitsrelais ist jeweils ein Sender/Empfänger zugeordnet. Der aktive Sicherheitssensor im Portflansch bzw. im Absperrteil dient zum Erkennen, ob der komplementäre passive Sicherheitssensor präsent ist, wobei ein Sende-/Empfangselement eine Nichtpräsens des passiven Sicherheitssensors drahtlos zum Sender/Empfänger signalisiert, der Sender/Empfänger darauf die Nichtpräsens des passiven Sicherheitssensors an das Sicherheitsrelais weitermeldet und die Maschinerie automatisch blockiert.

Das Absperrteil, in der Konfiguration als separater an den Portflansch andockbarer bzw. davon entfernbarer Verschlusskörper, oder der Portflansch sind mit der Erfassungseinheit, dem Microcontroller und einem Aktivator versehen, welcher manuell oder angetrieben betätigbar ist und der Verstellung des Absperrteils in die Blockier- oder Offenposition dient. Zusätzlich können dieses Absperrteil oder der Portflansch mit einem Display und einem Akku ausgestattet sein.

Der Portflansch hat einen RFID-Chip. Das Absperrteil, in der Konfiguration als separater an den Portflansch andockbarer bzw. davon entfernbarer Verschlusskörper, ist mit dem Sende-/Empfangselement versehen. Das Sende-/Empfangselement dient dazu, beim Ansetzen des Absperrteils an den Portflansch diese Paarung zu detektieren und gemäss der in der Steuereinheit bzw. im Microcontroller hinterlegten Daten, das Verriegeln des Absperrteils zuzulassen bzw. zu versagen.

Die im RFID-Chip gespeicherten Daten, welcher im Fixierteil angeordnet ist, lassen sich mittels des Sende-/Empfangselements auslesen und sind in der Steuereinheit und/oder im Microcontroller hinterlegt. Jede neue Handlung am Portflansch und an der Handschuhvorrichtung wird mittels der Steuereinheit erfasst und darin zur betreffenden Handschuhvorrichtung abgespeichert, also den individuellen Lebenslaufdaten hinzugefügt.

Die Herstellungsdaten jeder Handschuhvorrichtung können umfassen:
- die individuelle Seriennummer;
- das Herstellungsdatum;
- die Handschuhgrösse;
- die Materialart;
- das angewendete Sterilisationsverfahren; und
- das maximale Verwendungsdatum.

Die Lebenslaufdaten jeder Handschuhvorrichtung können umfassen:
- das Installationsdatum in einen Portflansch;
- die Personaldaten des Installateurs;
- die Kennung, an welchem Portflansch die Installation erfolgte;
- wann, wie oft und von welchem Bediener das Absperrteil an betreffender Handschuhvorrichtung in die Blockierposition gebracht bzw. daraus in die Offenposition bewegt wurde;
- Zeitpunkt und Zählung der Anzahl von Dekontaminationszyklen an der Arbeitskammer des Containments sowie der maximal zulässigen Anzahl von Dekontaminationszyklen;
- Zeitpunkt und Anzahl der durchgeführten Lecktests an betreffender Handschuhvorrichtung;
- die Chargen und Produkte, welche in der Arbeitskammer des Containments gehandhabt werden und bei denen die betreffende Handschuhvorrichtung in Verwendung ist;
- vom Bediener manuell einzugebende spezielle Vorkommnisse; und
- die Personaldaten des Installateurs, welcher den Ausbau und die Entsorgung der betreffenden Handschuhvorrichtung durchführt.

Die Erfassungseinheit ist zur Aufnahme biometrischer Kennzeichen des Bedieners, eines vom Bediener einzugebenden Codes oder der elektronischen Daten eines vom Bediener vorzuweisenden Datenträgers bestimmt. Die von der Erfassungseinheit vom Bediener aufgenommene Kennung, erteilt oder ansonsten verweigert dem jeweils aktiv wollenden Bediener die Autorisation zur Verstellung des Absperrteils in die Blockier- oder Offenposition am betreffenden Portflansch; dies im Zusammenwirken mit dem Microcontroller je nach im Microcontroller hinterlegten Daten bzw. über die Steuereinheit eingeholter Daten.

### Kurzbeschreibung der beigefügten Zeichnungen

Es zeigen:
Figur 1 - ein in einem Aufstellraum positioniertes Containment, in dessen Frontscheibe eingesetzter Portflansch, daran fixierter herkömmlicher Handschuh, ein Bediener greift mit dem Handschuh gemäss Stand der Technik in die Arbeitskammer des Containments hinein;
Figur 2A - die erfindungsgemässe Handschuhvorrichtung zum geschützten Eingriff in ein Containment, *erste Ausführungsform* mit geschlossenem Abdeckteil über dem Handschuh, als Prinzipdarstellung;
Figur 2B - die Darstellung gemäss Figur 2A, mit vom Handschuh entferntem Abdeckteil;
Figuren 3A bis 6: die erfindungsgemässe Handschuhvorrichtung in *erster Ausführungsform*, in den Phasen Einbau in einen Portflansch bis zur Benutzung durch einen Bediener, als Prinzipdarstellungen;

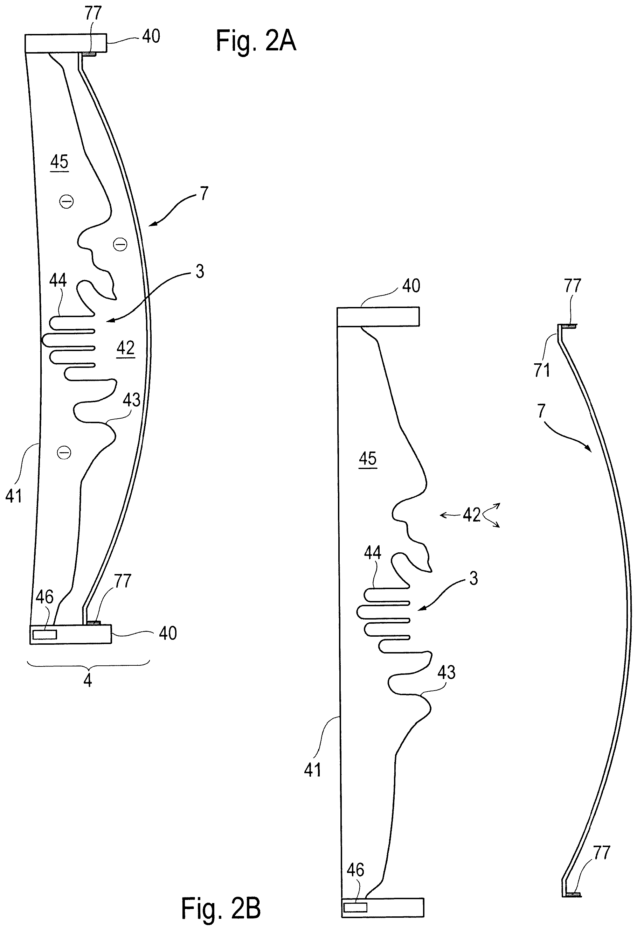

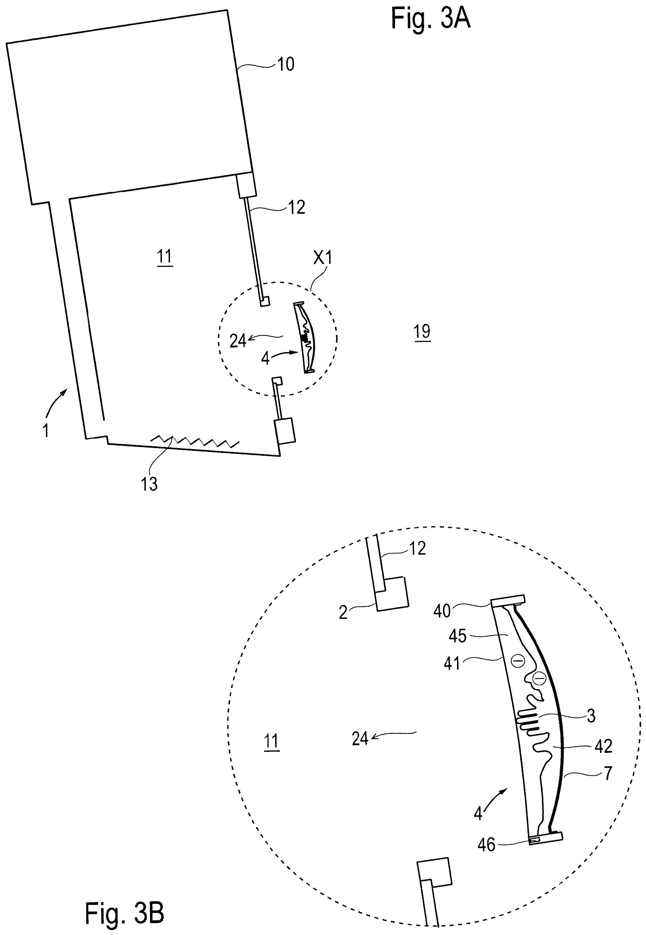

Figur 3A - das Containment aus Figur 1 mit am Containment bereitgestellter Handschuhvorrichtung gemäss Figur 2A;
Figur 3B - aus Figur 3A das vergrösserte Detail X1;

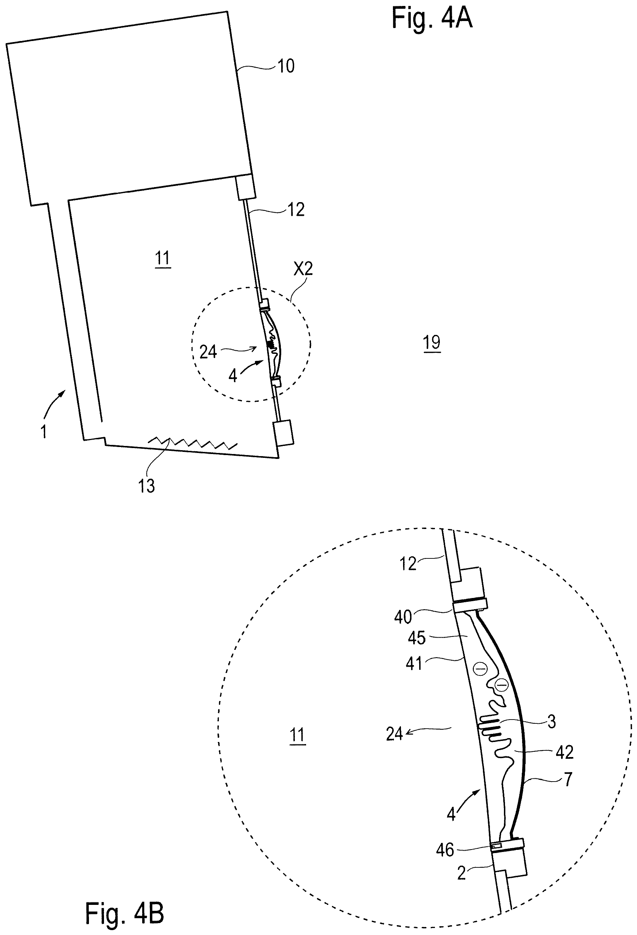

Figur 4A - die Anordnung gemäss Figur 3A, mit im Portflansch installierter Handschuhvorrichtung;
Figur 4B - aus Figur 4A das vergrösserte Detail X2;

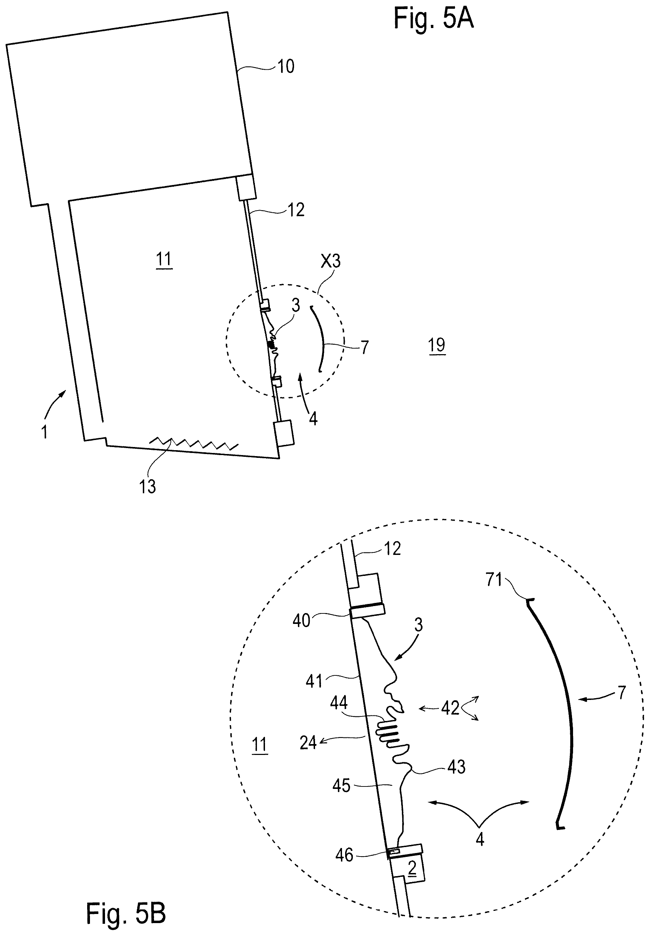

Figur 5A - die Anordnung gemäss Figur 4A, mit von der Handschuhvorrichtung entferntem Abdeckteil;
Figur 5B - aus Figur 5A das vergrösserte Detail X3;

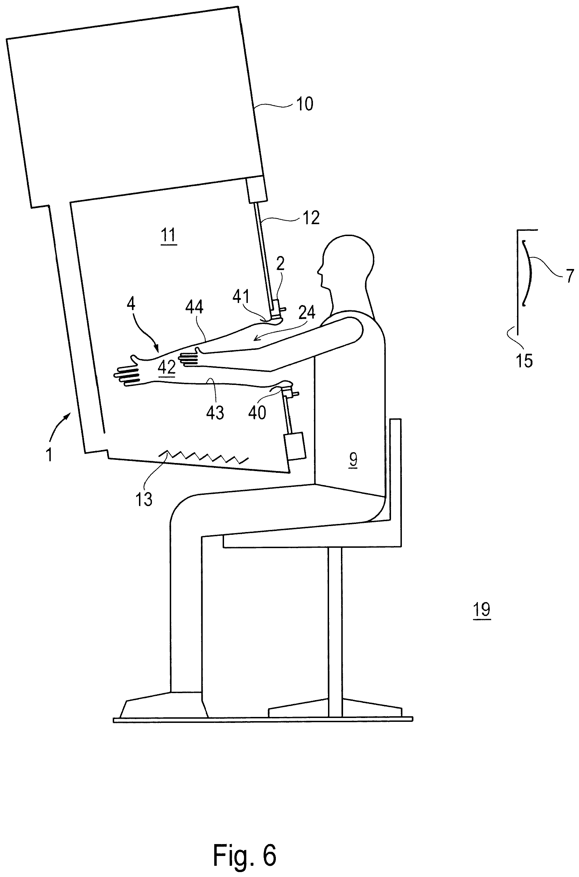

Figur 6 - die Anordnung gemäss Figur 1, mit der Handschuhvorrichtung gemäss Figur 2A, in die Arbeitskammer des Containments hineinlangender Bediener;

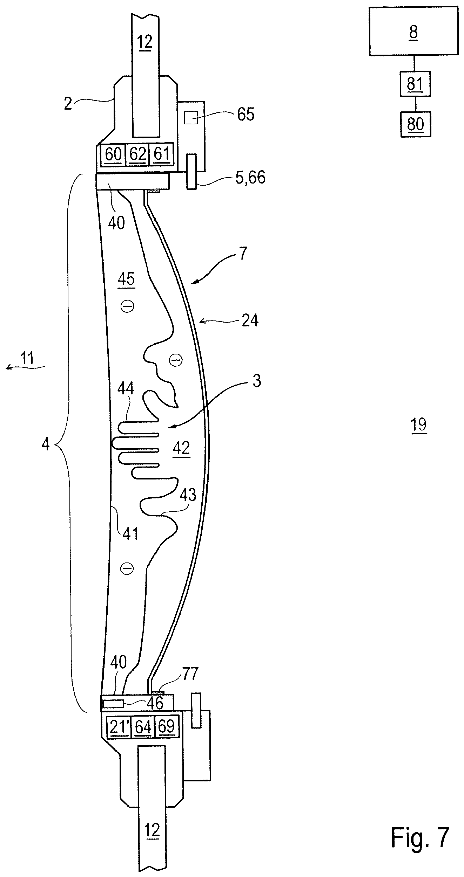

Figuren 7 bis 9E: die Handschuhvorrichtung *erster Ausführungsform* gemäss Figur 2A, in Kombination mit verschiedenen Varianten einer Schutzanordnung gegen unautorisierten Eingriff mit dem Handschuh aus der Handschuhvorrichtung in das Containment, als Prinzipdarstellungen;
Figur 7 - die Handschuhvorrichtung *erster Ausführungsform* gemäss Figur 2A im Portflansch installiert, geschlossenes Abdeckteil; dazu in Kombination die Schutzanordnung erster Variante, Absperrteil im Portflansch integriert, gegenwärtig in Offenposition, im Portflansch angeordnete Elektronikkomponenten, drahtlose Version, und zugehörige Steuereinheit;

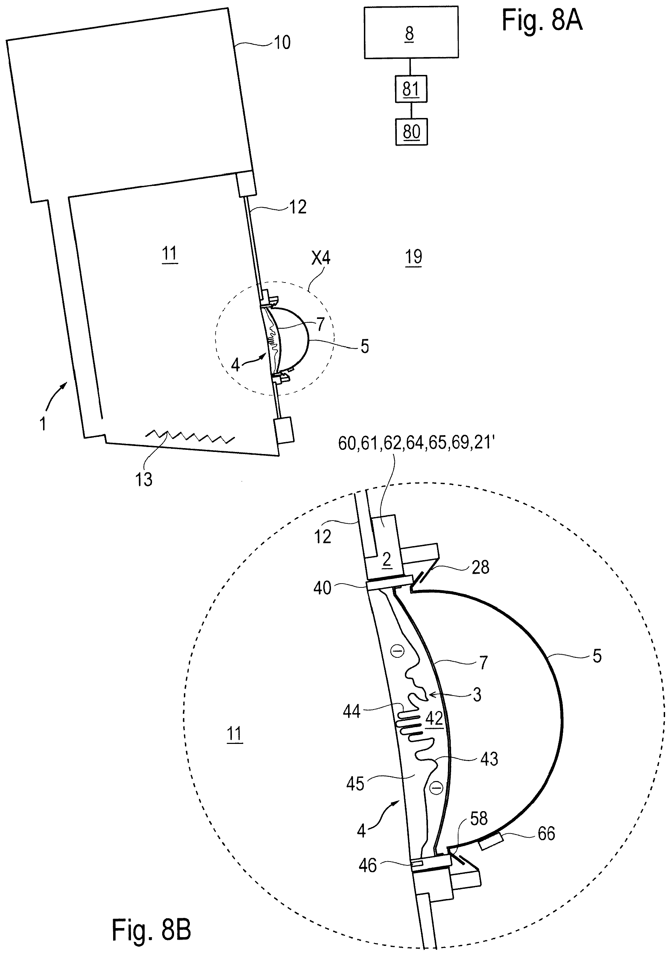

Figur 8A - die Handschuhvorrichtung *erster Ausführungsform* gemäss Figur 2A im Portflansch installiert, geschlossenes Abdeckteil; dazu in Kombination die Schutzanordnung zweiter Variante, halbschalenförmiges Absperrteil am Portflansch andockbar, gegenwärtig in Blockierposition, im Portflansch angeordnete Elektronikkomponenten, drahtlose Version, und zugehöriger Steuereinheit;
Figur 8B - aus Figur 8A das vergrösserte Detail X4;

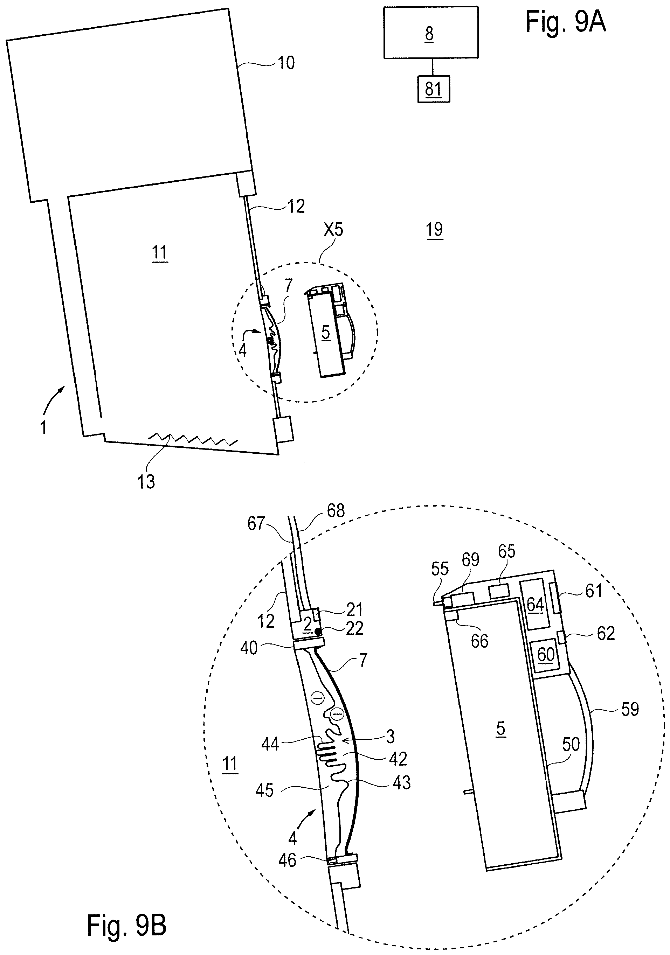

Figur 9A - die Handschuhvorrichtung *erster Ausführungsform* gemäss Figur 2A im Portflansch installiert, geschlossenes Abdeckteil; dazu in Kombination die angenäherte Schutzanordnung dritter Variante, haubenförmiges Absperrteil am Portflansch andockbar, gegenwärtig in Offenposition, im Absperrteil angeordnete Elektronikkomponenten, drahtgebundene Version, und zugehörige Steuereinheit;
Figur 9B - aus Figur 9A das vergrösserte Detail X5;

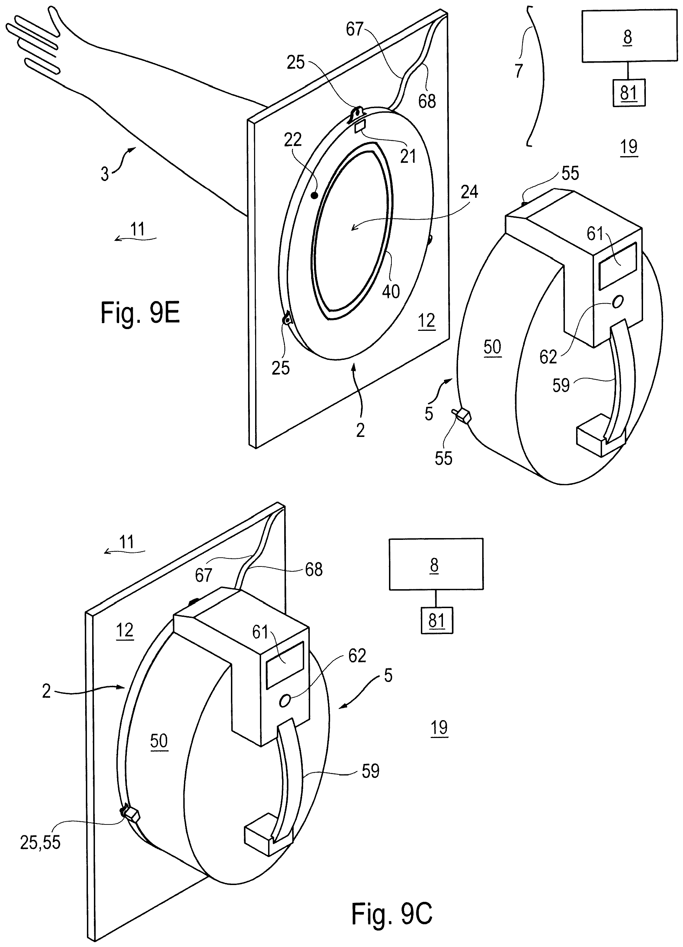

Figur 9C - die Anordnung gemäss Figur 9A mit am Portflansch verriegeltem Absperrteil dritter Variante, gegenwärtig in Blockierposition, im Absperrteil angeordnete Elektronikkomponenten, drahtgebundene Version und zugehörige Steuereinheit;

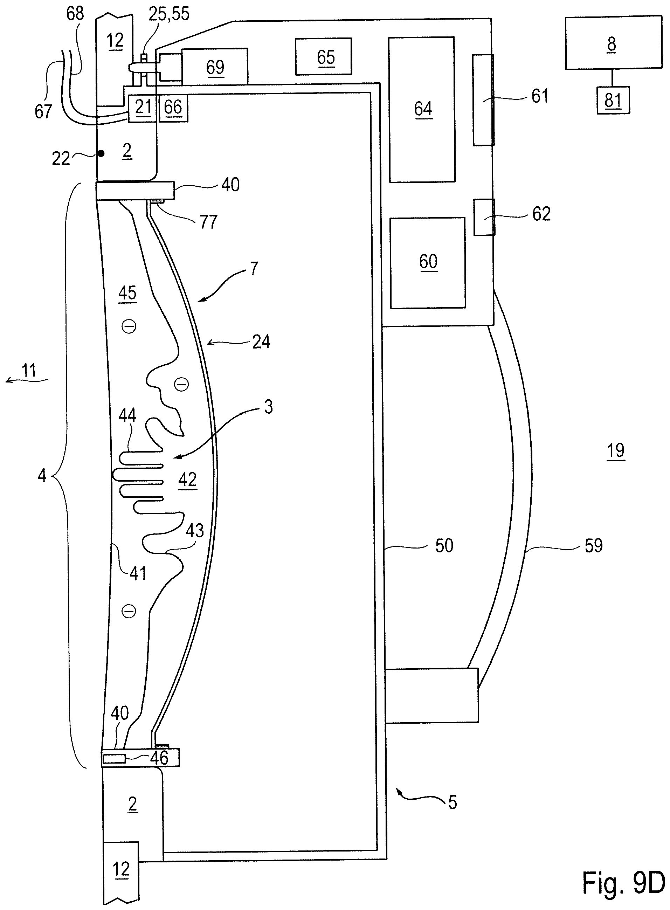

Figur 9D - die Anordnung gemäss Figur 9C, im Vertikalschnitt;
Figur 9E - die Anordnung gemäss Figur 9C, das Absperrteil gegenwärtig in Offenposition, das Abdeckteil entfernt und der Handschuh in die Arbeitskammer vorgestreckt;

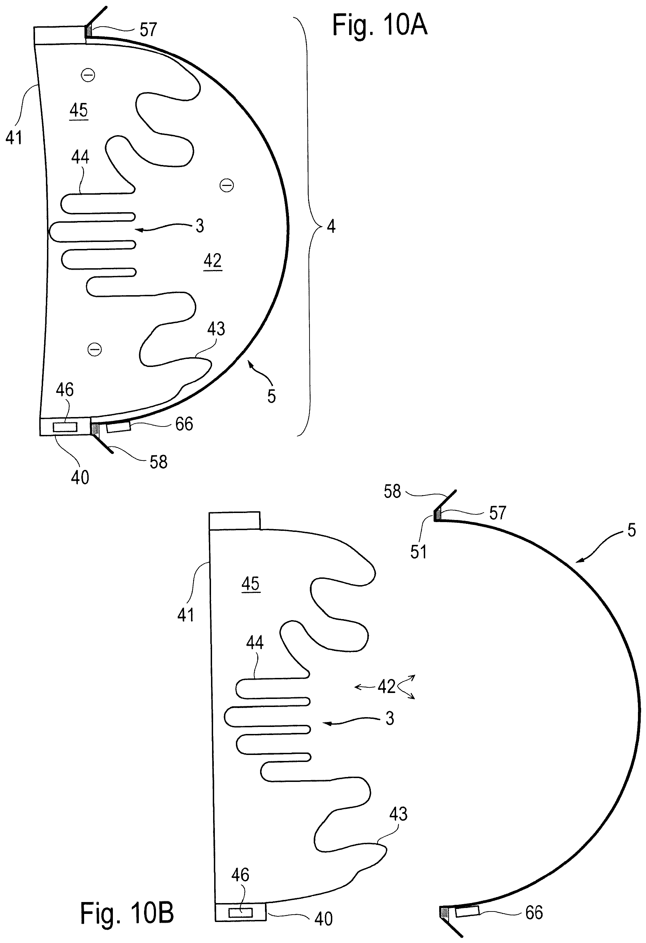

Figur 10A - die erfindungsgemässe Handschuhvorrichtung zum geschützten Eingriff in ein Containment, *zweite Ausführungsform* mit geschlossenem Absperrteil über dem Handschuh, als Prinzipdarstellung;
Figur 10B - die Darstellung gemäss Figur 10A, vom Handschuh entferntes Absperrteil;

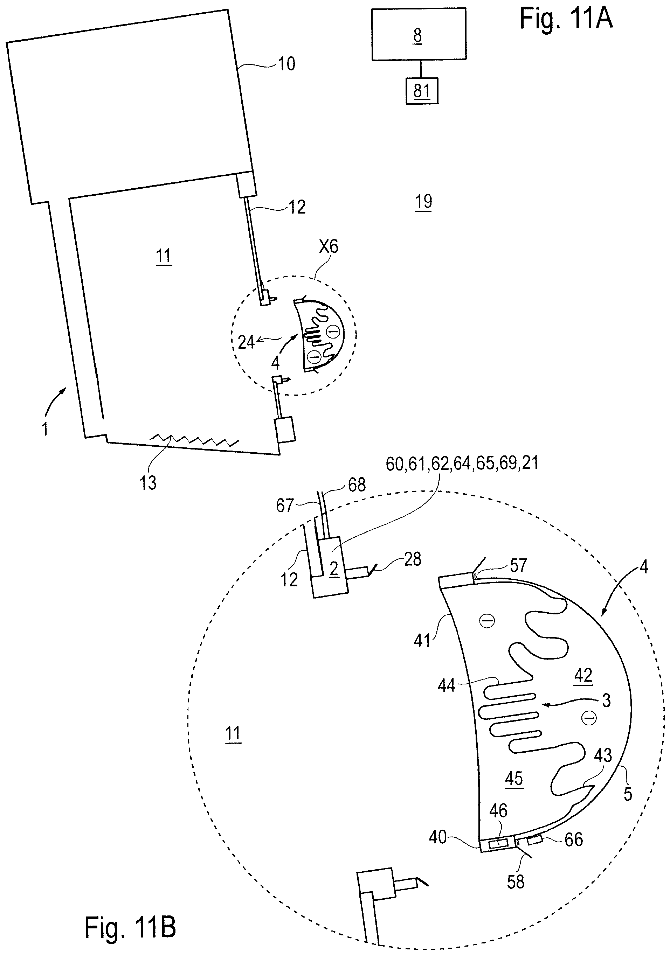

Figuren 11A bis 14: die Handschuhvorrichtung *zweiter Ausführungsform* gemäss Figur 10A, dazu in Kombination die Schutzanordnung *zweiter* Variante, halbschalenförmiges Absperrteil am Portflansch andockbar, im Portflansch angeordnete Elektronikkomponenten, in den Phasen Einbau in den Portflansch bis zur Benutzung durch einen Bediener, als Prinzipdarstellungen;
Figur 11A - das Containment aus Figur 1, am Containment bereitgestellte Handschuhvorrichtung gemäss Figur 10A, drahtgebundene Version, mit zugehöriger Steuereinheit;
Figur 11B - aus Figur 11A das vergrösserte Detail X6;

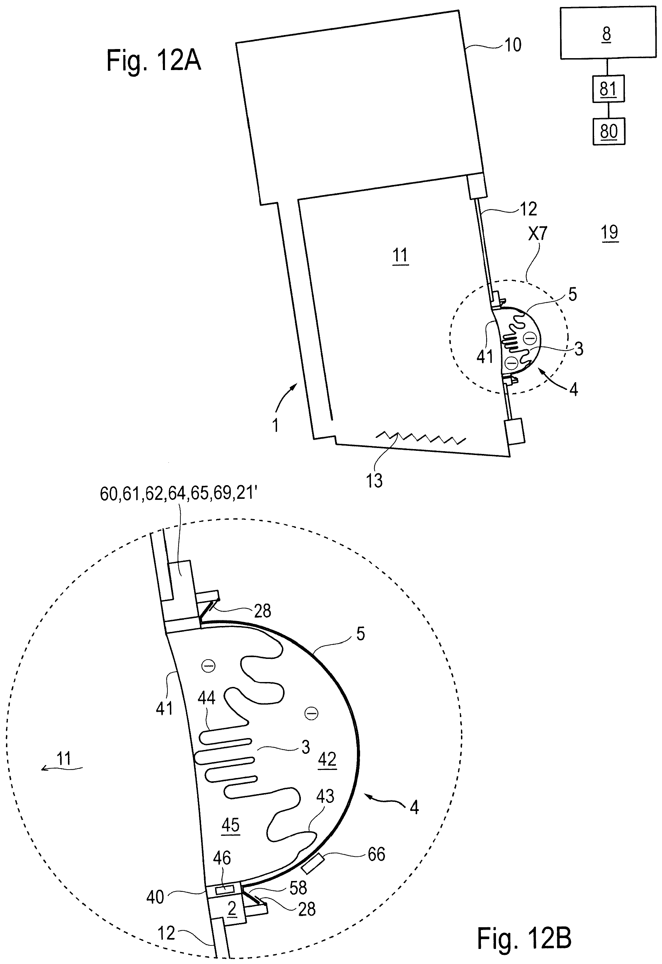

Figur 12A - die Anordnung gemäss Figur 11A, im Portflansch installierte Handschuhvorrichtung, drahtlose Version mit zugehöriger Steuereinheit;
Figur 12B - aus Figur 12A das vergrösserte Detail X7;

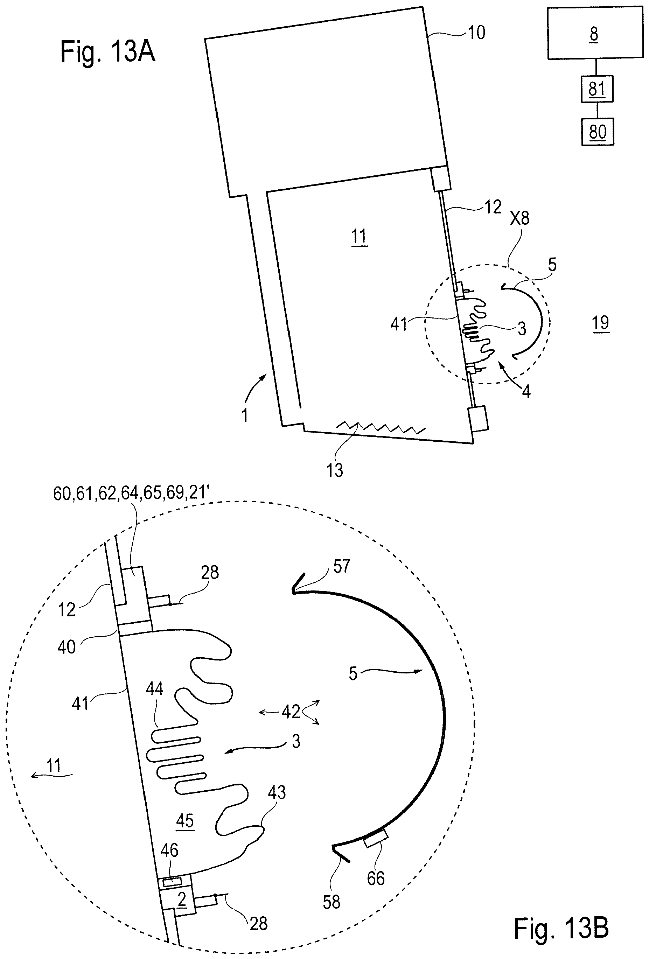

Figur 13A - die Anordnung gemäss Figur 12A, von der Handschuhvorrichtung entferntes Absperrteil, drahtlose Version mit zugehöriger Steuereinheit;
Figur 13B - aus Figur 13A das vergrösserte Detail X8; und

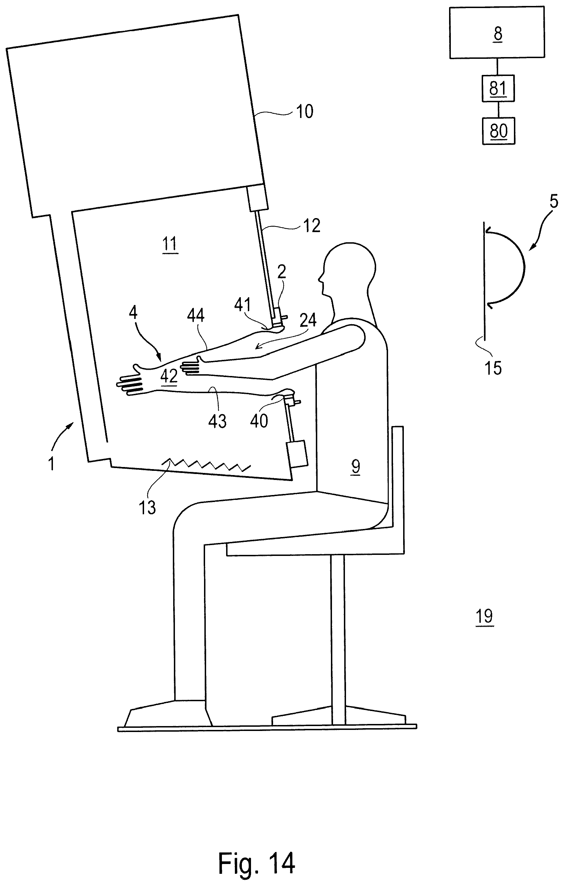

Figur 14 - die Anordnung mit der Handschuhvorrichtung aus Figur 13A, in die Arbeitskammer des Containments hineinlangender Bediener.

### Ausführungsbeispiel

Mit Bezug auf die beiliegenden Zeichnungen erfolgt nachstehend die detaillierte Beschreibung der erfindungsgemässen Handschuhvorrichtung in zwei Ausführungsformen. Beschrieben sind ferner die als Komplettierung zu beiden Ausführungsformen der Handschuhvorrichtung geschaffenen verschiedenen Schutzanordnungen gegen unautorisiertes Eingreifen in die Arbeitskammer mit dem Handschuh aus der Handschuhvorrichtung.

Für die gesamte weitere Beschreibung gilt folgende Festlegung. Sind in einer Figur zum Zweck zeichnerischer Eindeutigkeit Bezugsziffern enthalten und dabei zeichnerisch eindeutig erkennbar ist, dass es sich um "wiederkehrende" Bauteile handelt, aber im unmittelbar zugehörigen Beschreibungstext nicht erläutert, so sei im Interesse der Verkürzung, auf deren Erklärung in vorangehenden Figurenbeschreibungen hingewiesen.

### Figuren 2A und 2B

Dieses Figurenpaar betrifft eine Handschuhvorrichtung **4**, die als eine in den Portflansch **2** gasdicht einsetzbare Baugruppe ausgebildet ist. Einerseits besitzt die Handschuhvorrichtung **4** eine entfernbare bzw. zu öffnende Versiegelung **41**, und andererseits das am ringförmigen Fixierteil **40** gasdicht angesetzte, aber lösbare schalenförmige Abdeckteil **7.** Fixierteil **40** könnte auch von ovaler Geometrie sein.

Zwischen Versiegelung **41** und Abdeckteil **7** liegt der vakuumiert zusammengestaucht verpackte Handschuh **3.** Das Fixierteil **40** dient zur Befestigung der Handschuhvorrichtung **4** am Portflansch **2.**

Das an sich freie Ende des Handschuhs **3** ist am Fixierteil **40**, und/oder nahe dem Fixierteil **40** an der Versiegelung **41**, befestigt, wobei die Versiegelung **41** die lichte Weite des Fixierteils **40** zumindest im Wesentlichen überspannt. Im Fixierteil **40** ist ein RFID-Chip **46** angeordnet. Am Handschuh **3** sind die Innenfläche **43** und die Oberfläche **44** bezeichnet. Zwischen dem am Fixierteil **40** haftenden Abdeckteil **7** und der Innenfläche **43** liegt der Innenraum **42**, während zwischen der Versiegelung **41** und der Oberfläche **44** ein Frontraum **45** definiert wird.

Das Abdeckteil **7** ist vorzugsweise aus Kunststoff und weist an seinem Rand **71** eine Magnetzone **77** auf, die nutzbar sein könnte, um das von der in den Portflansch **2** eingebauten Handschuhvorrichtung **4** abgenommene Abdeckteil **7** ortsnah an einer geeigneten Parkstation **15** anzuhängen (siehe Figur 6). Eine lösbare form- und/oder kraftschlüssige Verbindung des Abdeckteils **7** am Fixierteil **40** besteht z.B. aus einer Formgebung am Rand **71** des Abdeckteils **7** mit komplementärer Formgebung am Fixierteil **40**, einem Haftmittel oder einer Sollbruchstelle zwischen Fixierteil **40** und Abdeckteil **7.**

Bei abgedichtet am Fixierteil **40** sitzenden Abdeckteil **7** und im Zustand der unversehrten Versiegelung **41** (siehe Figur 2A) herrscht im Innenraum **42** und im Frontraum **45** ein Unterdruck. Zumindest der Frontraum **45** mit den diesem zugewandten Flächen, nämlich die Oberfläche **44** und die Innenfläche der Versiegelung **41**, sind steril. Vorzugsweise sind in der Anfangssituation auch der Innenraum **42** mit den zugewandten Flächen, nämlich die Innenfläche **43** und die Innenseite des Abdeckteils **7**, steril. In der Ausgangssituation bewirkt der im Frontraum **45** bestehende Unterdruck eine konkave Krümmung der Versiegelung **41**, die einen vorteilhaft visuellen Indikator für den ordnungsgemässen Zustand der Handschuhvorrichtung **4** bildet.

Hat man das Abdeckteil **7** vom Fixierteil **40** entfernt, die Versiegelung **41** bleibt aber weiterhin unversehrt (siehe Figur 2B), ist der Innenraum **42** zur Atmosphäre hin offen. Auch der zuvor im Frontraum **45** der Handschuhvorrichtung **4** herrschende Unterdruck gleicht sich durch die Elastizität von Handschuh **3** und Versiegelung **41** dem Atmosphärendruck an, so dass die zuvor konkave Krümmung der Versiegelung **41** durch den sich einstellenden Druckausgleich aufgehoben wird.

Die fabrikmässig vorsterilisierte, verpackte und für den Einbau bereits weitgehend vorbereitete Handschuhvorrichtung **4** ergibt am Standort des Containments **1**, z.B. für den Pharmaproduzenten, eine markante Ersparnis an Zeit- und Geräteaufwand und zugleich eine erhöhte Produktsicherheit. Das bei den herkömmlichen Handschuhen **3** beim Einbau in den Portflansch **2** erforderliche Überziehen auf den dafür vorgesehenen Ring entfällt. Die Handschuhvorrichtung **4** mit dem Fixierteil **40** lässt sich in sehr praktikabler Weise, z.B. mittels einer gasdichten Einschraub- oder arretierbaren Rast-, Bajonett- oder Klippmechanik, als Baugruppe in den Portflansch **2** einsetzen, und senkt dadurch gleichzeitig das Risiko von Einbaufehlern. Die Handschuhvorrichtung **4** wird bei der fabrikmässigen Herstellung auf Dichtheit geprüft und anschliessend vakuumiert verpackt, wobei eine erhalten gebliebene konkave Krümmung der unter mechanischer Spannung stehenden Versiegelung **41**, die fortbestehende Dichtheit, also den ordnungsgemässen Zustand anzeigt. Die ansonsten bei herkömmlichen Handschuhen **3** nach dem Einbau zwingend durchzuführende Dichtheitsprüfung ist bei der Handschuhvorrichtung **4** verzichtbar. Die bereits werksseitig vorgenommene Sterilisation der Handschuhvorrichtung **4** mittels Gammabestrahlung oder Thermalbehandlung ergibt einen höheren Reinheitsgrad als eine Dekontamination während des im Containment **1** eingebauten Zustands. Überdies verkürzt sich die Dekontaminationszeit für die eingebaute vorsterilisierte Handschuhvorrichtung **4** gegenüber herkömmlichen Handschuhen **3**, da von der Handschuhvorrichtung **4** nur mehr die der Arbeitskammer **11** zugewandte Aussenfläche der Versiegelung **41** mit dekontaminiert werden muss, nicht mehr jedoch die gesamte diffizil strukturierte Aussenfläche **34** des Handschuhs **3.**

### Figuren 3A bis 6

Diese Figurenfolge illustriert die erfindungsgemässe Handschuhvorrichtung **4** *erster Ausführungsform*, in den Phasen vom Einbau in einen Portflansch **2** bis zur Benutzung durch einen Bediener **9.**

In der ersten Phase wird die Handschuhvorrichtung **4** mit der intakten, unversehrten Versiegelung **41**, dem gasdicht am Fixierteil **40** aufsitzenden Abdeckteil **7** und dem dazwischen steril eingeschlossenen Handschuh **3** bereitgestellt und mit der Versiegelung **41** voran dem offenen Zugang **24** angenähert (siehe Figuren 3A+3B).

Anschliessend erfolgt das Einsetzen der als Baueinheit beschaffenen Handschuhvorrichtung **4** in den Portflansch **2**, wobei das Fixierteil **40** gegenüber dem Portflansch **2** gasdicht ist, die Aussenfläche der Versiegelung **41** der Arbeitskammer **11** zugewandt ist und die Aussenseite des Abdeckteils **7** zum Aufstellraum **19** weist (siehe Figuren 4A+4B). Nun sollte die Dekontamination der Arbeitskammer **11** erfolgen, um die bisher unsterile Aussenfläche der Versiegelung **41** sowie die der Arbeitskammer **11** zugewandte Ringfläche des Fixierteils **40** zu behandeln.

In Vorbereitung des Eingreifens mit dem Handschuh **3** in die Arbeitskammer **11** muss das Abdeckteil **7** vom Fixierteil **40** entfernt werden, dadurch egalisiert sich der zuvor im Frontraum **45** herrschende Unterdruck mit dem Atmosphärendruck und die Versiegelung **41** verliert ihre konkave Krümmung (siehe Figuren 5A+5B).

Als letzte Phase für den Eingriff mit dem Handschuh **3** in die Arbeitskammer **11** fährt der Bediener **9** mit seiner Hand von aussen in den Handschuh **3** und durchstösst zuerst die Versiegelung **41**, um dann weiter in die Arbeitskammer **11** vorzudringen (siehe Figur 6). Je nach Beschaffenheit der Versiegelung **41** könnte zum Durchstossen bzw. Öffnen der Versiegelung **41** durch deren Loslösung ein Werkzeug dienen, mit dem aber eine Beschädigung des Handschuhs **3** ausgeschlossen ist. Eventuell vorteilhaft wäre das Öffnen der Versiegelung **41** vom Inneren der Arbeitskammer **11**, z.B. mit einem zur Maschinerie **13** gehörendem Roboter.

### Figuren 7 bis 9E

Diese Figurenfolge illustriert die Handschuhvorrichtung 4 *erster Ausführungsform* gemäss Figuren 2A+2B, in Kombination mit verschiedenen Varianten einer Schutzanordnung gegen unautorisierten Eingriff mit dem Handschuh **3** aus der Handschuhvorrichtung **4** in das Containment **1.**

### Figur 7

### Aufbau der Anordnung

Diese Schutzanordnung umfasst zunächst die Kombination aus im Portflansch **2** installierter Handschuhvorrichtung **4** mit aufgesetztem Abdeckteil **7** und dem direkt im Portflansch **2** integriertem Absperrteil **5**, z.B. als Irisblende beschaffen oder schwenkbar, aufspannbar, jalousieartig oder expandierbar ausgebildet. Der Portflansch **2** enthält als fest positionierte Elektronikkomponenten den aktiven Sicherheitssensor **21'**, den Akku **60**, das Display **61**, die Erfassungseinheit **62**, den Microcontroller **64**, das Sende-/Empfangselement **65** und den Aktivator **69**, der das Verstellen des Absperrteils **5** bewirkt. Am beweglichen Absperrteil **5** sitzt ein passiver Sicherheitssensor **66.** Im Fixierteil **40** ist ein RFID-Chip **46** untergebracht. Als drahtlose Version ist dem Verbund aus externer Steuereinheit **8** und Sicherheitsrelais **81** der Sender/Empfänger **80** zugeschaltet. Drahtlose Version deshalb, weil hier keine Kabel **67**,**68** für die Signalleitung und Stromversorgung der betreffenden Elektronikkomponenten im Regelbetrieb vorhanden sind. Allein der Akku **60** im Portflansch **2** sorgt für die Stromversorgung der im Portflansch **2** enthaltenen Elektronikkomponenten **61**, **62**, **64**, **65**, **21'** und **69.** Im Gegensatz dazu ist in den Figuren 9A+9B erstmals eine drahtgebundene Version gezeigt.

### Funktion der Anordnung

Nach dem Installieren der Schutzanordnung konnte die Inbetriebnahme des Containments **1** erfolgen. Dazu wurde zuerst die Handschuhvorrichtung **4** in den Zugang **24** im Portflansch **2** eingesetzt. Das Sende-/Empfangselement **65** liest die Seriennummer aus dem RFID-Chip **46** in der Handschuhvorrichtung **4** aus und hinterlegt diese in der dazu vorgesehenen Datenbank in der Steuereinheit **8.** Falls die Handschuhvorrichtung **4** nicht akzeptabel ist, wird dies von der Steuereinheit **8** festgestellt. Der Bediener **9** wird angewiesen, eine andere Handschuhvorrichtung **4** zu installieren. War jedoch alles in Ordnung, wurde das Absperrteils **5**, vom Aktivator **69** angetrieben, in die Blockierposition gefahren. Das Containment **1** startete den Betriebsmodus; die Maschinerie **13** in der Arbeitskammer **11** lief an, z.B. zwecks Abfüllung eines Medikaments.

Aufgrund dargestellter Offenposition des Absperrteils **5** erkennt man, dass ein Bediener **9** bereits weit fortgeschritten ist, sich mit dem Handschuh **3** Zugang **24** in die Arbeitskammer **11** zu verschaffen. Dazu hatte der Bediener **9** nach seiner erfolgreichen Identifizierung an der Erfassungseinheit **62** die Autorisation erhalten, das als Irisblende ausgebildete Absperrteil **5** in Offenposition zu bringen. Mit der Erfassungseinheit **62** kann die Aufnahme biometrischer Kennzeichen des Bedieners **9**, eines vom Bediener **9** einzugebenden Codes oder der elektronischen Daten eines vom Bediener **9** vorzuweisenden Datenträgers erfolgen.

Der Microcontroller **64** wertet die von der Erfassungseinheit **62** aufgenommenen Personaldaten mit den vorgegebenen Benutzerdaten, aus der in der Steuereinheit **8** hinterlegten Datenbank zur Zugriffsberechtigung, aus. Diese Daten können auch einzeln in jedem Microcontroller **64** hinterlegt sein. Der Microcontroller **64** kommuniziert drahtlos, z.B. über WLAN, über das Sende-/Empfangselement **65** mit der Steuereinheit **8** und übermittelt die entsprechenden Daten.

Erhielt der Bediener **9** aufgrund Hierarchie, Maschinenmodus, aktuellen Prozessschrittes oder Status der Handschuhvorrichtung **4** (z.B. festgestellte Beschädigung) keine Zugriffsberechtigung, wird dies am Display **61** angezeigt und es erfolgt keine weitere Aktion. Gilt der Bediener **9** als berechtigt, wird zuerst die Maschinerie **13** kontrolliert angehalten. Danach wird die Freigabe über den Microcontroller **64** an den im Portflansch **2** sitzenden Aktivator **69** übermittelt, und dieser bewegt das mechanische Absperrteil **5**, je nach dessen Gestalt, z.B. durch Wegschwenken oder Aufdrehen, aus der vorherigen Blockierposition in die Offenposition. Damit ist der Zugang **24** in einem ersten Schritt zu geöffnet.

Sobald sich das vom Aktivator **69** angetriebene Absperrteil **5** hin zur Offenposition bewegte, sich also der passive Sicherheitssensor **66** vom aktiven Sicherheitssensor **21'** entfernte, verlor der aktive Sicherheitssensor **21'** das Signal. Der aktive Sicherheitssensor **21'** übermittelte laufend sein Signal drahtlos über das Sende-/Empfangselement **65** an den Sender/Empfänger **80** und dieser die Daten jedoch drahtgebunden an das Sicherheitsrelais **81.** Durch den Signalunterbruch blockierte das Sicherheitsrelais **81** die Maschinerie **13** in der Arbeitskammer **13**, das Wiederanfahren der Maschinerie **13** war jetzt nicht mehr möglich.

Gleichzeitig mit dem Öffnen des Absperrteils **5** wurde über den Microcontroller **64** das Sende-/Empfangselement **65** aktiviert, welches den RFID-Chip **46** in der zugehörigen Handschuhvorrichtung **4** ausliest und dessen Seriennummer mit der in der Steuereinheit **8** hinterlegten Kennung, abgleicht. Anschliessend wird in der Steuereinheit **8** in die Datenbank für den betreffenden Portflansch **2** der aktuelle Eingriff vermerkt.

Entsteht für den Handschuh **3** bzw. für die Handschuhvorrichtung **4** durch den neuen Gebrauch ein kritischer oder unzulässiger Zustand, wird dies dem Bediener **9** über das Display **61** am Portflansch **2** mitgeteilt. In der Datenbank der Steuereinheit **8** wird diese Information so hinterlegt, dass der weitere Gebrauch nicht mehr oder nur noch unter einschränkenden Auflagen möglich ist. Diese sind individuell von einem Systemadministrator zu definieren. Eine Handschuhvorrichtung **4** kann also beim Aufweisen eines Schadens, z.B. infolge ungeschickten Hantierens an der Maschinerie **13**, als "defekt und für die Charge als gesperrt" klassifiziert werden.

Zwar befindet sich das Absperrteil **5** gegenwärtig schon in Offenposition, der Zugang **24** ist jedoch noch nicht ganz frei, die komplette Handschuhvorrichtung **4** mit der intakten Versiegelung **41**, dem am Fixierteil **40** aufgesetzten Abdeckteil **7** und dem dazwischen zusammengestauchten Handschuh **3** versperren noch den Zugang **24.** Um mit dem in der Handschuhvorrichtung **4** noch zusammengestauchtem vorsterilisiertem Handschuh **3** in die Arbeitskammer **11** einzugreifen, muss zunächst erst das gasdicht am Fixierteil **40** sitzende Abdeckteil **7** entfernt und dann mit dem vorgeschobenen Handschuh **3** die zuvor an der Aussenfläche dekontaminierte Versiegelung **41** durchstossen werden, bzw. in anderer Weise geöffnet werden, z.B. vom Inneren der Arbeitskammer **11**, vorzugsweise mit einem zur Maschinerie **13** gehörendem Roboter.

### Figuren 8A und 8B

Dieses Figurenpaar illustriert die im Portflansch **2** installierte Handschuhvorrichtung **4** *erster Ausführungsform* gemäss Figur 2A bei geschlossenem Abdeckteil **7.** Dazu in Kombination gezeigt ist die Schutzanordnung zweiter Variante mit dem halbschalenförmigem Absperrteil **5** am Portflansch **2** gedockt, gegenwärtig in Blockierposition. Wie bei der vorherigen Figur, handelt es sich um eine drahtlose Version und erneut sind alle Elektronikkomponenten **21'**, **60**, **61**, **62**, **64**, **65** und **69** im Portflansch **2** angeordnet. Die Besonderheit besteht hier darin, dass anstelle des direkt im Portflansch **2** integrierten Absperrteils **5** nun ein separates halbschalenförmiges Absperrteil **5** vorgesehen ist, welches einen Fortsatz **58** besitzt. Dieses Absperrteil **5** ist lösbar auf das Fixierteil **40** aufgesetzt, wobei sich der Fortsatz **58** mit einem sich vom Portflansch **2** erstreckenden, schaltbaren Halteelement **28** verriegeln lässt. Das Halteelement **28** wird vom Aktivator **69** zwischen den Schaltstellungen "Auf' oder "Zu" angetrieben, bzw. zur manuellen Verstellung freigegeben. Der passive Sicherheitssensor **66** ist nun auf dem separaten Absperrteil **5** positioniert (vergleiche die Figuren 10A+10B). Der Betrieb des Containments **1**, die Signalverarbeitung und das Handling mit der Schutzanordnung sind äquivalent zur Figur 7, nur ist anstatt des im Portflansch **2** integrierten Absperrteils **5** das separate halbschalenförmige Absperrteil **5** aus seiner Blockier- in die Offenposition zu bewegen, um bei der im Portflansch **2** mit dem Abdeckteil **7** sitzenden Handschuhvorrichtung **4** den Zugang **24** in einem ersten Schritt zu öffnen.

### Figuren 9A bis 9D

Dieser Aufbau basiert auf der im Portflansch **2** installierten Handschuhvorrichtung *erster Ausführungsform* gemäss Figuren 2A+2B mit der Abdeckung **7**, in Kombination mit der Schutzanordnung dritter Variante, nämlich einem haubenförmigen Absperrteil **5**, das am Portflansch **2** andockbar ist. Nun sind die meisten Elektronikkomponenten **60**, **61**, **62**, **64**, **65**, **66** und **69** in diesem Absperrteil **5** mit seinem Gehäuse **50** untergebracht. Der Griff **59** dient zur bedienerfreundlichen Handhabung. Im Portflansch **2** befinden sich der aktive Sicherheitssensor **21** sowie der RFID-Chip **22**, und zum Portflansch **2** führen die Kabel **67**,**68** für die Stromversorgung und Signalleitung. Daher gilt dieser Aufbau als drahtgebundene Version. Im Regelbetrieb erfolgt die Stromversorgung der betreffenden Elektronikkomponenten über das zweite Kabel **68.** Der eingebaute Akku **60** dient als Notaggregat bei Stromausfall, um während einer begrenzten Zeitspanne eventuell noch relevante Aktionen am Containment **1** auszuführen. Ferner weist der Portflansch **2** die ersten Andockelemente **25** auf, welche in der Blockierposition des Absperrteils **5** der Verriegelung mit den komplementären zweiten Andockelementen **55** am Absperrteil **5** dienen. Die zweiten Andockelemente **55** werden vom Aktivator **69** zwischen den Schaltstellungen "Auf' oder "Zu" angetrieben, bzw. zur manuellen Verstellung freigegeben.

Das im Absperrteil **5** vorhandene Sende-/Empfangselement **65** liest und verarbeitet, wie gehabt, bei Annäherung an den Portflansch **2** die Seriennummer aus, welche im im Fixierteil **40** der Handschuhvorrichtung 4 sitzenden RFID-Chip **46** abgespeichert ist. Zugleich liest das Sende-/Empfangselement **65** auch die dem jeweiligen Portflansch **2** zugeteilte Positionskennung aus, welche in dem im Portflansch **2** positionierten RFID-Chip **22** enthalten ist. Die bei einer an einem Containment **1** vorhandenen Vielzahl von Portflanschen **2** und darin jeweils eingesetzten Handschuhvorrichtungen **4** erfassten Positionskennungen und Seriennummern werden in der dazu vorgesehenen Datenbank in der Steuereinheit **8** hinterlegt. Dies ermöglicht die Zuordnung eines jeweiligen Absperrteils **5** zum zugehörigen Portflansch **2.** Wird beispielsweise ein Absperrteil **5** auf einen nichtzugehörigen Portflansch **2** aufgesetzt, und dessen Absperrteil **5** auf den anderen Portflansch **2**, so wird diese Vertauschung in der Steuereinheit **8** registriert. Je nach Ausführung wird dann das falsche Aufsetzen über das Display **62** gemeldet, oder die neuen Positionen der Absperrteile **5** überschreiben die alten Positionen. Wenn das Absperrteil **5** korrekt an dem zugedachten Portflansch **2** angesetzt ist, die ersten und zweiten Andockelemente **25**,**55** zueinander ausgerichtet sind, erfolgt deren Verriegelung durch die Betätigung des Aktivators **69.**

### Figuren 10A und 10B

Dieses Figurenpaar betrifft eine Handschuhvorrichtung **4** in *zweiter Ausführungsform*, die ebenfalls als eine in den Portflansch **2** gasdicht einsetzbare Baugruppe ausgebildet ist. In Abwandlung zu den Figuren 2A+2B gemäss *erster Ausführungsform*, gehört jetzt, anstelle des Abdeckteils **7**, ein halbschalenförmiges Absperrteil **5** mit Doppelfunktion zur Handschuhvorrichtung **4**, nämlich zunächst als vom Fixierteil **40** lösbare, gasdichte Ummantelung des Handschuhs **3** zusammen mit der Versiegelung **41** und ferner im im Portflansch **2** eingebauten Zustand als mit dem Portflansch **2** verriegelbares Absperrteil **5.**

Ergänzend zur Erläuterung bei den Figuren 8A+8B hinsichtlich der Unterschiede zwischen den Handschuhvorrichtungen **4** *erster* und *zweiter Ausführungsform*, ist noch anzufügen, dass man, z.B. benachbart zum Rand **51**, eine Magnetzone **57** vorgesehen hat, die nutzbar sein könnte, um das von der in den Portflansch **2** eingebauten Handschuhvorrichtung **4** abgenommene Absperrteil **5** ortsnah an einer geeigneten Parkstation **15** anzuhängen (siehe Figur 14). Ansonsten wird hinsichtlich Gleichnissen in Konstruktion und Arbeitsweise auf die Handschuhvorrichtung **4** gemäss *erster Ausführungsform* mit den Figuren 2A+2B verwiesen.

### Figuren 11A bis 14

Diese Figurenfolge basiert auf der Handschuhvorrichtung *zweiter Ausführungsform* gemäss Figuren 10A+10B, kombiniert mit der Schutzanordnung zweiter Variante, also dem halbschalenförmigen doppelt funktionalen Absperrteil **5**, in den Phasen Einbau in den Portflansch bis zur Benutzung durch einen Bediener **9**.

### Figuren 11A und 11B

Illustriert ist die drahtgebundene Version als Aufbau mit der Handschuhvorrichtung **4**, der zum Einbau in den Portflansch **2** bereitsteht. Der Zugang **24** in die Arbeitskammer **11** steht offen. Dass die Handschuhvorrichtung **4** bisher noch nicht gebraucht wurde, also der innerliche vorsterilisierte Zustand gewahrt blieb und das Absperrteil **5** als lösbarer Bestandteil gasdicht am Fixierteil **40** sitzt, ist an der konkaven Krümmung der Versiegelung **41** erkennbar. Der Portflansch **2** weist alle Elektronikkomponenten **21**, **60**, **61**, **62**, **64**, **65** und **69** auf, und es sind die beiden Kabel **67**,**68** angeschlossen. Am Absperrteil **5** sitzt der passive Sicherheitssensor **66**, und im Fixierteil **40** der Handschuhvorrichtung **4** ist der RFID-Chip **46** angeordnet. Zum Andocken der Handschuhvorrichtung **4** mit dem sich vom aufsitzenden Absperrteil **5** erstreckenden Fortsatz **58**, muss das Halteelement **28** am Portflansch **2** sich in der Stellung "Auf befinden. Es wird angenommen, dass der Bediener **9** am Halteelement **28** bereits die Stellung "Auf' so vorfindet oder autorisiert ist, den Schaltimpuls an den Aktivator **69** auszulösen. Extern vom Containment **1** befindet sich die mit dem Sicherheitsrelais **81** verbundene Steuereinheit **8.**

### Figuren 12A und 12B

Dieses Figurenpaar zeigt den fortgeschrittenen Einbau der Handschuhvorrichtung **4** in den Portflansch **2**, wobei weiterhin das Absperrteil **5** gasdicht am Fixierteil **40** sitzt und die Versiegelung **41** gemäss ihrer konkaven Krümmung intakt ist. Zur Veranschaulichung der möglichen Variationsbreite bei der Gestaltung der Schutzanordnung ist hier die drahtlose Version dargestellt. Daher ist dem Verbund aus externer Steuereinheit **8** und Sicherheitsrelais **81** wiederum ein Sender/Empfänger **80** zugeschaltet.

Ist bei der Heranführung der Handschuhvorrichtung **4** zum Einbau im Portflansch **2** eine ausreichender Nähe zwischen dem im Fixierteil **40** untergebrachten RFID-Chip **46** und dem im Portflansch **2** angeordneten Sende-/Empfangselement **65** erreicht, wird die Seriennummer der Handschuhvorrichtung **4** ausgelesen und mit der Datenbank in der Steuereinheit **8** abgeglichen, wonach dem Bediener **9** am Display **61** eine korrekte oder fehlerhafte Zuordnung zwischen Portflansch **2** und herangeführter Handschuhvorrichtung **4** angezeigt wird. Bei fehlerhafter Zuordnung wird die Verriegelung zwischen Fortsatz **58** und Halteelement **28** verweigert, was ein Handeln des Bedieners **9** erfordert, nämlich entweder die Bereitstellung einer passenden Handschuhvorrichtung **4** oder - wenn möglich - ein Überschreiben der Eintragung in der Datenbank, um weiterzufahren.

Wenn der Einbau an sich beendet ist, muss der Bediener **9** über die Erfassungseinheit **62** seine Identifikation eingeben, um dessen Autorisation für den Einbau zu überprüfen. Bei korrekter Zuordnung und für den Bediener **9** erteilter Autorisation, erhält der Aktivator **69** über die Steuereinheit **8** und den Microcontroller **64** den Schaltbefehl, das Halteelement **28** in die Stellung "Zu" zu schalten, wodurch Fortsatz **58** und Halteelement **28** miteinander verriegelt werden, so dass das Absperrteil **5** in Blockierposition kommt und nicht ohne Autorisation entfernt werden kann. Der Zugriff auf den im Vakuum liegenden Handschuh **3** und das Vordringen in die Arbeitskammer **11** sind gesperrt. Das korrekt erfolgte Einsetzen der Handschuhvorrichtung **4** am Portflansch **2** wird über das Display **61** bestätigt. In der Datenbank der Steuereinheit **8** wird insbesondere erfasst, welche Handschuhvorrichtung **4** an welchem Portflansch **2** von welchem Bediener **9** und wann eingebaut wurde.

In der Blockierposition erkennt der aktive Sicherheitssensor **21** die definierte Nähe des passiven Sicherheitssensors **66**, nimmt das Signal auf und übermittelt laufend sein Signal drahtlos über das Sende-/Empfangselement **65** an den Sender/Empfänger **80** und dieser die Daten jedoch drahtgebunden an das Sicherheitsrelais **81.** Bei dem kontinuierlichen Signalfluss bewirkt das Sicherheitsrelais **81** keine Blockierung der Maschinerie **13** in der Arbeitskammer **11**, der Betriebsmodus für Containment **1** und Maschinerie **13** können gestartet werden. In einem nächsten Schritt folgt die Dekontamination der Arbeitskammer **11**, um die unsterile Aussenfläche der Versiegelung **41** zu behandeln.

### Figuren 13A bis 14

Diese Figurenfolge schliesst hinsichtlich Aufbau und Funktionsweise der Anordnung an das vorherige Figurenpaar 12A+12B, weiterhin in drahtloser Version, an. Hier wird nun das autorisierte Entfernen des Absperrteils **5** von der Handschuhvorrichtung **4** zur Herstellung der Offenposition behandelt, damit der Bediener **9** mit dem aus der Handschuhvorrichtung **4** herausgeschobenen Handschuh **3** durch den Zugang **24** in die Arbeitskammer **11** eingreifen kann.

Mit Bezugnahme auf die Darlegungen zu den Figuren 7+8A,8B bedarf es keiner erneuten Schilderung der geräteseitigen Schaltungen und des signalverarbeitenden Ablaufs, daher beschränkt sich die nachstehende Erörterung auf die Besonderheiten durch die Verwendung dieser Handschuhvorrichtung **4.** Somit wird davon ausgegangen, dass der Bediener **9** die Autorisation zum Entfernen des Absperrteils **5** von der Handschuhvorrichtung **4** erhielt, darauf das Halteelement **28** durch den Aktivator **69** bereits in die Stellung "Auf" schaltete, also die Verriegelung zwischen Halteelement **28** und Fortsatz **58** aufgehoben ist. Spätestens mit dem beginnenden Entfernen des Absperrteils **5** vom Fixierteil **40** kommt es zwischen dem passiven Sicherheitssensor **66** und aktivem Sicherheitssensor **21'** zum Signalunterbruch, was eine Blockierung der Maschinerie **13** in der Arbeitskammer **11** bewirkt, wie bereits mehrfach beschrieben.

Nach gelöstem Absperrteil **5**, das sich z.B. mittels der Magnetzone **57** an der Parkstation **15** deponieren lässt, wird der Zugriff zum Handschuh **3** geöffnet und der Innenraum **42** hin zum Aufstellraum **19** offen. Damit geht zwar an der Innenfläche **43** vom Handschuh **3** die Sterilität verloren, nicht aber im Frontraum **45** mit den angrenzenden Flächen. Die intakte Versiegelung **41**, welche durch den einwirkenden Atmosphärendruck von der konkaven Krümmung sich nun planar aufspannt, verhindert eine aus der Arbeitskammer **11** in den Frontraum **45** vordringende Kontamination durch überströmende Gase oder Partikel.

Nun kann der Bediener **9** von aussen in den zunächst noch zusammengestauchten Handschuh **3** eingreifen und diesen in die Richtung Arbeitskammer **11** vorstrecken, dabei wird die nun beidseits sterile Versiegelung **41** durchstossen. Jeweils nach einem Eingriff ist es ratsam, den Handschuh **3** in das noch nicht wieder verriegelte Absperrteil **5** unterzubringen. Hiernach wird das Absperrteil **5** wieder auf das Fixierteil **40** aufgesetzt und mittels Halteelement **28** und Fortsatz **58** verriegelt, so dass das Absperrteil **5** erneut in Blockierposition steht und erst bei aktueller Autorisation wieder entfernbar ist, um einen nächsten Eingriff in die Arbeitskammer **11** mit dem Handschuh **3** durch die offene Versiegelung **41** und den Zugang **24** im Portflansch **2** zuzulassen.

In der Datenbank der Steuereinheit **8** wird insbesondere erfasst, von welcher Handschuhvorrichtung **4**, ausgestattet mit welchem Handschuh **3**, an welchem Portflansch **2**, von welchem Bediener **9**, wann und über welchen Zeitraum, welches Absperrteil **5** zwischen Blockierposition und Offenposition bewegt wurde.

## Patentansprüche

1. Handschuhvorrichtung (**4**) mit einem Handschuh (**3**) zum geschützten Eingriff durch einen in einem Portflansch (**2**) vorhandenen Zugang (**24**) in eine Arbeitskammer (**11**) eines Containments (**1**), wobei:
a) der Portflansch (**2**) in einer Frontscheibe (**12**) oder in einer Wandung eines Gehäuses (**10**) des in einem Aufstellraum (**19**) positionierten Containments (**1**) eingebaut ist;
b) in der Arbeitskammer (**11**) eine Maschinerie (**13**) zur Bearbeitung eines Behandlungsguts vorhanden sein kann;
c) die Handschuhvorrichtung (**4**) als eine in den Portflansch (**2**) gasdicht einsetzbare Baugruppe in Gestalt eines Einsatzes ausgebildet ist; und umfasst:
da) ein zur gasdichten Befestigung am Portflansch (**2**) bestimmtes Fixierteil (**40**);
db) eine einerseits angeordnete entfernbare bzw. zu öffnende Versiegelung (**41**);
dc) andererseits ein Abdeckteil (**7**) oder ein Absperrteil (**5**), welches von der Baugruppe lösbar ist; und
dd) den zwischen der Versiegelung (**41**) und dem Abdeckteil (**7**) bzw. Absperrteil (**5**), vakuumiert verpackten Handschuh (**3**), der eine Innenfläche (**43**) und eine Oberfläche (**44**) besitzt, **dadurch gekennzeichnet, dass**
e) bei auf der Handschuhvorrichtung (**4**) aufsitzendem Abdeckteil (**7**) oder Absperrteil (**5**) und im Zustand der unversehrten Versiegelung (**41**):
ea) zwischen der Versiegelung (**41**) und der Oberfläche (**44**) des Handschuhs (**3**) ein Frontraum (**45**) liegt, in dem ein Unterdruck herrscht; und
eb) der Frontraum (**45**) sowie die diesem zugewandte Innenfläche der Versiegelung (**41**) und die Oberfläche (**44**) des Handschuhs (**3**) steril sind.

2. Handschuhvorrichtung (**4**) nach Anspruch 1, **dadurch gekennzeichnet, dass** bei auf der Handschuhvorrichtung (**4**) aufsitzendem Abdeckteil (**7**) oder Absperrteil (**5**) und im Zustand der unversehrten Versiegelung (**41**):
a) zwischen der Innenfläche (**43**) des Handschuhs (**3**) und dem Abdeckteil (**7**) bzw. Absperrteil (**5**) ein Innenraum (**42**) liegt, in dem ein Unterdruck herrscht; und
b) der Innenraum (**42**) sowie die diesem zugewandte Innenfläche des Abdeckteils (**7**) oder des Absperrteils (**5**) und die Innenfläche (**43**) des Handschuhs (**3**) steril sind.

3. Handschuhvorrichtung (**4**) nach zumindest einem der Ansprüche 1 und 2, **dadurch gekennzeichnet, dass**
a) das an sich freie Ende des Handschuhs (**3**) am Fixierteil (**40**) und/oder nahe dem Fixierteil (**40**) an der Versiegelung (**41**) befestigt ist, wobei die Versiegelung (**41**) die lichte Weite des Fixierteils (**40**) zumindest im Wesentlichen überspannt; und
b) bei auf der Handschuhvorrichtung (**4**) aufsitzendem Abdeckteil (**7**) bzw. Absperrteil (**5**), und im Zustand intakter Versiegelung (**41**), die Versiegelung (**41**) visuell erkennbar konkav zur Handschuhvorrichtung (**4**) infolge des darin herrschenden Unterdrucks gekrümmt ist.

4. Handschuhvorrichtung (**4**) nach zumindest einem der Ansprüche 1 bis 3, **dadurch gekennzeichnet, dass**
a) das Fixierteil (**40**) ringförmig oder oval ausgebildet ist und vorzugsweise aus Kunststoff besteht; und
b) das Abdeckteil (**7**) bzw. das Absperrteil (**5**) vorzugsweise schalenartig ausgebildet ist und vorzugsweise aus Kunststoff besteht.

5. Handschuhvorrichtung (**4**) nach zumindest einem der Ansprüche 1 bis 4, **dadurch gekennzeichnet, dass** im Fixierteil (**40**) ein RFID-Chip (**46**) angeordnet ist, welcher eine individuelle Seriennummer und vorzugsweise zusätzlich seine Herstellungsdaten abgespeichert hat.

6. Handschuhvorrichtung (**4**) nach Anspruch 5, **dadurch gekennzeichnet, dass** der RFID-Chip (**46**) beschreibbar ist und alle neuen Handlungen an der Handschuhvorrichtung (**4**), einschliesslich am Handschuh (**3**), erfasst und im RFID-Chip (**46**) oder in der Steuereinheit (**8**) den individuellen Lebenslaufdaten der Handschuhvorrichtung (**4**), hinzugefügt werden.

7. Handschuhvorrichtung (**4**) nach zumindest einem der Ansprüche 1 bis 6, **dadurch gekennzeichnet, dass**
a) das als integraler Bestandteil der Handschuhvorrichtung (**4**) davon lösbar beschaffene Absperrteil (**5**) zum Schutz gegen unautorisierten Eingriff mit dem Handschuh (**3**) durch den im Portflansch (**2**) vorhandenen Zugang (**24**) in die Arbeitskammer (**11**) des Containments (**1**), nutzbar ist; oder
b) zum Schutz gegen solchen unautorisierten Eingriff ein Absperrteil (**5**) vorgesehen ist, welches:
ba) als direkt in den Portflansch **(**2) integrierter, schwenkbarer, aufspannbarer, jalousieartiger oder expandierbarer Verschlusskörper ausgebildet ist, oder
bb) als separater an den Portflansch (**2**) andockbarer bzw. davon entfernbarer Verschlusskörper beschaffen ist.

8. Handschuhvorrichtung (**4**) nach Anspruch 7, **dadurch gekennzeichnet, dass** das als integraler Bestandteil der Handschuhvorrichtung (**4**) davon lösbar beschaffene Absperrteil (**5**) einen Fortsatz (**58**) besitzt, der zum Zusammenwirken mit einem sich vom Portflansch (**2**) erstreckenden schaltbaren Halteelement (**28**) bestimmt ist, um das Absperrteil (**5**) zusätzlich am Portflansch (**2**) temporär zu sichern.

9. Handschuhvorrichtung (**4**) nach zumindest einem der Ansprüche 1 bis 8, **dadurch gekennzeichnet, dass**
a) das Abdeckteil (**7**) bzw. das Absperrteil (**5**) eine Magnetzone (**77**,**57**) besitzt, die zum Zusammenwirken mit dem Fixierteil (**40**) bestimmt ist, um das Abdeckteil (**7**) bzw. das Absperrteil (**5**) temporär zusätzlich zu sichern; wobei
b) die Magnetzone (**77**,**57**) ferner dazu nutzbar ist, wenn das Abdeckteil (**7**) bzw. das Absperrteil (**5**) von der Handschuhvorrichtung (**4**) gelöst ist, um dieses an einer Parkstation (**15**) zu deponieren.

10. Handschuhvorrichtung (**4**) nach zumindest einem der Ansprüche 1 bis 9, **dadurch gekennzeichnet, dass**
a) bei einer Vielzahl am Containment (**1**) installierter Portflanschen (**2**) jeweils eine Handschuhvorrichtung (**4**) am jeweiligen Portflansch (**2**) befestigt ist;
b) zur Aufnahme von Personaldaten eines Bedieners (**9**) eine Erfassungseinheit (**62**) vorgesehen ist, die eine Verbindung zu einem Microcontroller (**64**) besitzt, um bei Korrespondenz zwischen den erfassten Personaldaten und den Daten im Microcontroller (**64**) an einen Aktivator (**69**) einen Schaltbefehl zu erteilen, wodurch sich das Absperrteil (**5**) in eine Blockierposition bringen bzw. daraus in eine Offenposition bewegen lässt und somit der Zugang (**24**) gesperrt bzw. zugänglich ist;
c) der Aktivator (**69**) am Portflansch (**2**) oder am Absperrteil (**5**) angeordnet ist; und
d) die Daten des Microcontrollers (**64**) direkt darin hinterlegt sind oder von einer externen Steuereinheit (**8**) stammen.

11. Handschuhvorrichtung (**4**) nach Anspruch 10, **dadurch gekennzeichnet, dass**
a) die Erfassungseinheit (**62**) zur Aufnahme von Personaldaten des Bedieners (9) dem jeweiligen Portflansch (**2**) oder dem jeweiligen Absperrteil (**5**) zugeordnet ist; und
b) bei Korrespondenz zwischen den erfassten Personaldaten und den Daten im Microcontroller (**64**) der Bediener (**9**) per Schaltbefehl vom Microcontroller (**64**) die Autorisation erhält, dieses bestimmte Absperrteil (**5**) an diesem bestimmten Portflansch (**2**) aufzusetzen und in die Blockierposition bringen bzw. zu entriegeln und von diesem bestimmten Portflansch (**2**) abzunehmen, wodurch der Zugang (**24**) gesperrt bzw. zugänglich ist.

12. Handschuhvorrichtung (**4**) nach zumindest einem der Ansprüche 10 und 11, **dadurch gekennzeichnet, dass** die Erfassungseinheit (**62**) zur Aufnahme von Personaldaten des Bedieners (**9**) vorhanden ist:
a) im jeweiligen Portflansch (**2**); oder
b) im jeweiligen Absperrteil (**5**); oder
c) für sämtliche betroffenen Portflansche (**2**) und Absperrteile (**5**) des Containments (**1**) in einem mobilen Gerät, z.B. einem Tabletcomputer.

13. Handschuhvorrichtung (**4**) nach zumindest einem der Ansprüche 10 bis 12, **dadurch gekennzeichnet, dass**
aa) das Absperrteil (**5**), in der Konfiguration als im Portflansch (**2**) integrierter Verschlusskörper, und der Portflansch (**2**) jeweils mit einem Sicherheitssensor (**21**,**66**;**66**,**21'**) versehen sind; und
ab) die beiden Paare von Sicherheitssensoren (**21**,**66**;**66**,**21'**) dazu dienen, im Zusammenwirken mit einem externen Sicherheitsrelais (**81**), die Stellung des Absperrteils (**5**) im Portflansch (**2**) zu erfassen und bei offenstehendem Absperrteil (**5**) ein automatisches Blockieren der Maschinerie (**13**) zu schalten; oder
ba) das Absperrteil (**5**), in der Konfiguration als separater an den Portflansch (**2**) andockbarer bzw. davon entfernbarer Verschlusskörper, und der Portflansch (**2**) jeweils mit einem Sicherheitssensor (**21**,**66**;**66**,**21'**) versehen sind; und
bb) die beiden Sicherheitssensoren (**21**,**66**;**66**,**21'**) dazu dienen, im Zusammenwirken mit einem externen Sicherheitsrelais (**81**), die Stellung des Absperrteils (**5**) in Relation zum Portflansch (**2**) zu erfassen und bei Distanzierung des Absperrteils (**5**) vom Portflansch (**2**) ein automatisches Blockieren der Maschinerie (**13**) zu schalten; oder
ca) das Absperrteil (**5**), in der Konfiguration als mit der Handschuhvorrichtung (**4**) lösbar verbundener Verschlusskörper, der am Portflansch (**2**) verriegelbar bzw. davon abnehmbar ist, und der Portflansch (**2**) jeweils mit einem Sicherheitssensor (**21**,**66**;**66**,**21'**) versehen sind; und
cb) die beiden Paare von Sicherheitssensoren (**21**,**66**;**66**,**21'**) dazu dienen, im Zusammenwirken mit einem externen Sicherheitsrelais (**81**), die Stellung des Absperrteils (**5**) in Relation zum Portflansch (**2**) zu erfassen und bei Distanzierung des Absperrteils (**5**) vom Portflansch (**2**) ein automatisches Blockieren der Maschinerie (**13**) zu schalten.

14. Handschuhvorrichtung (**4**) nach Anspruch 13, **dadurch gekennzeichnet, dass**
a) der Steuereinheit (**8**) und dem damit jeweils pro Portflansch (**2**) zusammenwirkenden Sicherheitsrelais (**81**) jeweils ein Sender/Empfänger (**80**) zugeordnet ist; und
b) der aktive Sicherheitssensor (**21'**) im Portflansch (**2**) bzw. im Absperrteil (**5**) zum Erkennen dient, ob der komplementäre passive Sicherheitssensor (**66**) präsent ist, wobei ein Sende-/Empfangselement (**65**) eine Nichtpräsens des passiven Sicherheitssensors (**66**) drahtlos zum Sender/Empfänger (**80**) signalisiert, der Sender/Empfänger (**80**) darauf die Nichtpräsens des passiven Sicherheitssensors (**66**) an das Sicherheitsrelais (**81**) weitermeldet und die Maschinerie (**13**) automatisch blockiert.

15. Handschuhvorrichtung (**4**) nach zumindest einem der Ansprüche 10 bis 14, **dadurch gekennzeichnet, dass** das Absperrteil (**5**), in der Konfiguration als separater an den Portflansch (**2**) andockbarer bzw. davon entfernbarer Verschlusskörper, oder der Portflansch (**2**) versehen sind mit:
a) der Erfassungseinheit (**62**);
b) dem Microcontroller (**64**); und
c) einem Aktivator (**69**), welcher manuell oder angetrieben betätigbar ist und der Verstellung des Absperrteils (**5**) in die Blockier- oder Offenposition dient; sowie optional mit:
d) einem Display (**61**) und einem Akku (**60**).

16. Handschuhvorrichtung (**4**) nach Anspruch 14, **dadurch gekennzeichnet, dass**
a) der Portflansch (**2**) einen RFID-Chip (**22**) hat; und
b) das Absperrteil (**5**), in der Konfiguration als separater an den Portflansch (**2**) andockbarer bzw. davon entfernbarer Verschlusskörper, mit dem Sende-/Empfangselement (**65**) versehen ist; wobei
c) das Sende-/Empfangselement (**65**) dazu dient, beim Ansetzen des Absperrteils (**5**) an den Portflansch (**2**) diese Paarung zu detektieren und gemäss der in der Steuereinheit (**8**) bzw. im Microcontroller (**64**) hinterlegten Daten, das Verriegeln des Absperrteils (**5**) zuzulassen bzw. zu versagen.

17. Handschuhvorrichtung (**4**) nach zumindest einem der Ansprüche 14 bis 16, **dadurch gekennzeichnet, dass**
a) die im RFID-Chip (**46**) gespeicherten Daten, welcher im Fixierteil (**40**) angeordnet ist, sich mittels des Sende-/Empfangselements (**65**) auslesen lassen und in der Steuereinheit (**8**) und/oder im Microcontroller (**64**) hinterlegt sind; und
b) jede neue Handlung am Portflansch (**2**) und an der Handschuhvorrichtung (**4**) mittels der Steuereinheit (**8**) erfasst wird und darin zur betreffenden Handschuhvorrichtung (**4**) abgespeichert, also den individuellen Lebenslaufdaten hinzugefügt wird.

18. Handschuhvorrichtung (**4**) nach zumindest einem der Ansprüche 5, bis 17, **dadurch gekennzeichnet, dass**
a) die Herstellungsdaten jeder Handschuhvorrichtung (**4**) umfassen können:
aa) die individuelle Seriennummer;
ab) das Herstellungsdatum;
ac) die Handschuhgrösse;
ad) die Materialart;
ae) das angewendete Sterilisationsverfahren;
af) das maximale Verwendungsdatum; und
b) die Lebenslaufdaten jeder Handschuhvorrichtung (**4**) umfassen können:
ba) das Installationsdatum in einen Portflansch (**2**);
bb) die Personaldaten des Installateurs;
bc) die Kennung, an welchem Portflansch (**2**) die Installation erfolgte;
bd) wann, wie oft und von welchem Bediener (**9**) das Absperrteil (**5**) an betreffender Handschuhvorrichtung (**4**) in die Blockierposition gebracht bzw. daraus in die Offenposition bewegt wurde;
be) Zeitpunkt und Zählung der Anzahl von Dekontaminationszyklen an der Arbeitskammer (**11**) des Containments (**1**) sowie der maximal zulässigen Anzahl von Dekontaminationszyklen;
bf) Zeitpunkt und Anzahl der durchgeführten Lecktests an betreffender Handschuhvorrichtung (**4**);
bg) die Chargen und Produkte, welche in der Arbeitskammer (**11**) des Containments (**1**) gehandhabt werden und bei denen die betreffende Handschuhvorrichtung (**4**) in Verwendung ist;
bh) vom Bediener (**9**) manuell einzugebende spezielle Vorkommnisse; und
bi) die Personaldaten des Installateurs, welcher den Ausbau und die Entsorgung der betreffenden Handschuhvorrichtung (**4**) durchführt.

19. Handschuhvorrichtung (**4**) nach zumindest einem der Ansprüche 10 bis 18, **dadurch gekennzeichnet, dass**
a) die Erfassungseinheit (**62**) zur Aufnahme biometrischer Kennzeichen des Bedieners (**9**), eines vom Bediener (**9**) einzugebenden Codes oder der elektronischen Daten eines vom Bediener (**9**) vorzuweisenden Datenträgers bestimmt ist; und
b) die von der Erfassungseinheit (**62**) vom Bediener (**9**) aufgenommene Kennung, im Zusammenwirken mit dem Microcontroller (**64**), dem jeweils aktiv wollenden Bediener (**9**), je nach im Microcontroller (**64**) hinterlegten Daten bzw. über die Steuereinheit (**8**) eingeholter Daten, die Autorisation zur Verstellung des Absperrteils (**5**) in die Blockier- oder Offenposition am betreffenden Portflansch (**2**) erteilt oder ansonsten verweigert.

## Claims

1. A glove device (**4**) with a glove (**3**) for protected intervention in a work chamber (**11**) of a containment (**1**) through an access (**24**) present in a port flange (**2**), wherein:
a) the port flange (**2**) is installed in a front window (**12**) or in a wall of a housing (**10**) of the containment (**1**) positioned in an installation space (**19**); and
b) equipment (**13**) for processing a material to be treated can be provided in the work chamber (**11**);
c) the glove device (**4**) is designed as a module, in the form of an insert, which can be inserted gas-tight into the port flange (**2**); and comprises:
da) a fixing part (**40**), which is intended to be fastened gas-tight to the port flange (**2**);
db) a seal (**41**), which is arranged on one side and is removable or is to be opened;
dc) on the other side a cover part (**7**) or a shut-off part (**5**), which is releasable from the module; and
dd) the glove (**3**) vacuum-packed between the two, which glove has an inner face (**43**) and a surface (**44**), **characterized in that**
e) when the cover part (**7**) or shut-off part (**5**) is mounted on the glove device (**4**) and the seal (**41**) is intact:
ea) a front space (**45**) lies between the seal (**41**) and the surface (**44**) of the glove (**3**), in which front space a negative pressure prevails; and
eb) the front space (**45**) and the inner face of the seal (**41**) facing said front space and the surface (**44**) of the glove (**3**) are sterile.

2. The glove device (**4**) according to claim 1, **characterized in that** when the cover part (**7**) or shut-off part (**5**) is fitted on the glove device (**4**) and the seal (**41**) is intact:
a) an interior (**42**) lies between the inner face (**43**) of the glove (**3**) and the cover part (**7**) or shut-off part (**5**), in which interior a negative pressure prevails; and
b) the interior (**42**) and the inner face of the cover part (**7**) or of the shut-off part (**5**) facing said interior and the inner face (**43**) of the glove (**3**) are sterile.

3. The glove device (**4**) according to at least one of claims 1 and 2, **characterized in that**
a) the free end of the glove (**3**) is fastened to the fixing part (**40**) and/or to the seal (**41**) in the vicinity of the fixing part (**40**), wherein the seal (**41**) at least substantially spans the clear width of the fixing part (**40**); and
b) when the cover part (**7**) or shut-off part (**5**) is mounted on the glove device (**4**) and the seal (**41**) is intact, the seal (**41**) is visually noticeably curved concavely relative to the glove device (**4**) as a result of the negative pressure prevailing therein.

4. The glove device (**4**) according to at least one of claims 1 to 3, **characterized in that**
a) the fixing part (**40**) is annular or oval and preferably consists of plastic; and
b) the cover part (**7**) or the shut-off part (**5**) is preferably shell-like and preferably consists of plastic.

5. The glove device (**4**) according to at least one of claims 1 to 4, **characterized in that** an RFID chip (**46**) is arranged in the fixing part (**40**) and has, stored therein, an individual serial number and preferably additionally its production data.

6. The glove device (**4**) according to claim 5, **characterized in that** the RFID chip (**46**) is writable and all new actions at the glove device (**4**), including those at the glove (**3**), are captured and added in the RFID chip (**46**) or in the control unit (**8**) to the individual maintenance data of the glove device (**4**).

7. The glove device (**4**) according to at least one of claims 1 to 6, **characterized in that**
a) the shut-off part (**5**) provided as an integral part of the glove device (**4**) and removable therefrom can be used for protection against unauthorized intervention in the work chamber (**11**) of the containment (**1**) through the access (**24**) present in the port flange (**2**) using the glove (**3**); or
b) a shut-off part (**5**) is provided for protection against such unauthorized access and:
ba) is integrated directly in the port flange (**2**) and is formed in a pivotable, stretchable, shutter-like or expandable manner, or
bb) is formed as a separate closure body that can be docked on or removed from the port flange (**2**).

8. The glove device (**4**) according to claim 7, **characterized in that** the shut-off part (**5**) provided as an integral part of the glove device (**4**) and releasable therefrom has an extension (**58**), which is intended for cooperation with a switchable retaining element (**28**) extending from the port flange (**2**) in order to additionally secure the shut-off part (**5**) to the port flange (**2**) temporarily.

9. The glove device (**4**) according to at least one of claims 1 to 8, **characterized in that**
a) the cover part (**7**) or the shut-off part (**5**) has a magnetic zone (**77**,**57**) which is intended for cooperation with the fixing part (**40**) in order to additionally secure the cover part (**7**) or the shut-off part (**5**) temporarily; wherein
b) if the cover part (**7**) or the shut-off part (**5**) is released from the glove device (**4**), the magnetic zone (**77**,**57**) can also be used in order to deposit the cover part of shut-off part at a parking station (**15**).

10. The glove device (**4**) according to at least one of claims 1 to 9, **characterized in that**
a) in the event that multiple port flanges (**2**) are installed on the containment (**1**), there is one glove device (**4**) fastened to each port flange (**2**);
b) to record personal data of an operator (**9**), a capture unit (**62**) is provided, which has a connection to a microcontroller (**64**), in order to issue a switching command to an activator (**69**) if there is correspondence between the captured personal data and the data in the microcontroller (**64**), whereby the shut-off part (**5**) can be brought into a blocking position or can be moved therefrom into an open position and therefore the access (**24**) is blocked or accessible, respectively;
c) the activator (**69**) is arranged directly on the port flange (**2**) or on the shut-off part (**5**); and
d) the data of the microcontroller (**64**) are stored directly therein or originate from an external control unit (**8**).

11. The glove device (**4**) according to claim 10, **characterized in that**
a) the capture unit (**62**) for recording personal data of the operator (**9**) is assigned to the corresponding port flange (**2**) or the corresponding shut-off part (**5**); and
b) if there is correspondence between the captured personal data and the data in the microcontroller (**64**), the operator (**9**) receives the authorization by switching command from the microcontroller (**64**) to fit this specific shut-off part (**5**) to this specific port flange (**2**) and to bring it into the blocking position or to unlock it and to remove it from this specific port flange (**2**), whereby the access (**24**) is blocked or accessible, respectively.

12. The glove device (**4**) according to at least in one of claims 10 and 11, **characterized in that** the capture unit (**62**) for recording personal data of the operator (**9**) is provided:
a) in the corresponding port flange (**2**); or
b) in the corresponding shut-off part (**5**); or
c) for all relevant port flanges (**2**) and shut-off parts (**5**) of the containment (**1**) in a mobile device, for example a tablet computer.

13. The glove device (**4**) according to at least one of claims 10 to 12, **characterized in that**
aa) the shut-off part (**5**), in the configuration as a closure body integrated in the port flange (**2**), and the port flange (**2**) are each provided with a safety sensor (**21**,**66**;**66**,**21'**); and
ab) the two pairs of safety sensors (**21**,**66**;**66**,**21'**) are used, in cooperation with an external safety relay (**81**), to detect the position of the shut-off part (**5**) in the port flange (**2**) and, when the shut-off part (**5**) is open, to activate an automatic blocking of the equipment (**13**); or
ba) the shut-off part (**5**), in the configuration as a separate closure body which can be docked on and removed from the port flange (**2**), and the port flange (**2**) are each provided with a safety sensor (**21**,**66**;**66**,**21'**); and
bb) the two safety sensors (**21**,**66**;**66**,**21'**) are now used, in cooperation with an external safety relay (**81**), to capture the position of the shut-off part (**5**) in relation to the port flange (**2**) and, when the shut-off part (**5**) is distanced from the port flange (**2**), to activate an automatic blocking of the equipment (**13**); or
ca) the shut-off part (**5**), in the configuration as a closure body which is releasably connected to the glove device (**4**) and which can be locked on and removed from the port flange (**2**), and the port flange (**2**) are each provided with a safety sensor (**21**,**66**;**66**,**21'**); and
cb) the two pairs of safety sensors (**21**,**66**;**66**,**21'**) serve, in cooperation with an external safety relay (**81**), to capture the position of the shut-off part (**5**) in relation to the port flange (**2**) and, when the shut-off part (**5**) is distanced from the port flange (**2**), to activate an automatic blocking of the equipment (**13**).

14. The glove device (**4**) according to claim 13, **characterized in that**
a) the control unit (**8**) and the safety relay (**81**) cooperating therewith per port flange (**2**) is in each case assigned a transmitter/receiver (**80**); and
b) the active safety sensor (**21'**) in the port flange (**2**) or in the shut-off part (**5**) serves to identify whether the complementary passive safety sensor (**66**) is present, wherein a transmitting/receiving element (**65**) wirelessly signals an absence of the passive safety sensor (**66**) to the transmitter/receiver (**80**), whereupon the transmitter/receiver (**80**) communicates the absence of the passive safety sensor (**66**) to the safety relay (**81**) and automatically blocks the equipment (**13**).

15. The glove device (**4**) according to at least one of claims 10 to 14, **characterized in that** the shut-off part (**5**), in the configuration as a separate closure body which can be docked on or removed from the port flange (**2**), or the port flange (**2**) are provided with:
a) the capture unit (**62**);
b) the microcontroller (**64**); and
c) an activator (**69**), which is actuatable manually or in driven fashion and serves to move the shut-off part (**5**) into the blocking or open position; and optionally with:
d) a display (**61**) and a battery (**60**).

16. The glove device (**4**) according to claim 14, **characterized in that**
a) the port flange (**2**) has an RFID chip (**22**); and
b) the shut-off part (**5**), in the configuration as a separate closure body which can be docked on or removed from the port flange (**2**), is provided with the transmitting/receiving element (**65**); wherein
c) the transmitting/receiving element (**65**) is used, when placing the shut-off part (**5**) on the port flange (**2**), to detect this pairing and to permit or refuse the locking of the shut-off part (**5**) according to the data stored in the control unit (**8**) or in the microcontroller (**64**).

17. The glove device (**4**) according to at least one of claims 14 to 16, **characterized in that**
a) the data stored in the RFID chip (**46**) which is arranged in the fixing part (**40**) can be read by means of the transmitting/receiving element (**65**) and are stored in the control unit (**8**) and/or in the microcontroller (**64**); and
b) each new action at the port flange (**2**) and at the glove device (**4**) is captured by means of the control unit (**8**) and is stored therein for the relevant glove device (**4**), that is to say is added to the individual maintenance data.

18. The glove device (**4**) according to at least one of claims 5 to 17, **characterized in that**
a) the production data of each glove device (**4**) can comprise:
aa) the individual serial number;
ab) the production date;
ac) the glove size;
ad) the material type;
ae) the used sterilization method;
af) the maximum use-by date; and
b) the maintenance data of each glove device (**4**) can comprise:
ba) the date of installation in a port flange (**2**);
bb) the personal data of the installer;
bc) the identifier of the port flange (**2**) on which the installation was performed;
bd) when, how often and by which operator (**9**) the shut-off part (**5**) at the relevant glove device (**4**) was brought into the blocking position or moved therefrom into the open position;
be) the time and count of the number of decontamination cycles at the work chamber (**11**) of the containment (**1**) and the maximum permissible number of decontamination cycles;
bf) the time and number of the leak tests performed on the relevant glove device (**4**);
bg) the batches and products which are handled in the work chamber (**11**) of the containment (**1**) and for which the relevant glove device (**4**) is used;
bh) special instructions to be input manually by the operator (**9**); and
bi) the personal data of the installer performing the disassembly and disposal of the relevant glove device (**4**).

19. The glove device (**4**) according to at least one of claims 10 to 18, **characterized in that**
a) the capture unit (**62**) is intended for recording biometric identifiers of the operator (**9**), a code to be input by the operator (**9**), or the electronic data of a data carrier to be presented by the operator (**9**); and
b) the identifier recorded by the capture unit (**62**) from the operator (**9**), in cooperation with the microcontroller (**64**), grants or otherwise denies the operator (**9**) wishing to become active authorization to move the shut-off part (**5**) into the blocking or open position at the relevant port flange (**2**), depending on the data stored in the microcontroller (**64**) or data received via the control unit (**8**).

## Revendications

1. Dispositif ganté (**4**) comprenant un gant (**3**) destiné à intervenir de manière protégée dans une chambre de travail (**11**) d'une enceinte (**1**) par un accès (**24**) prévu dans une bride d'ouverture (**2**):
a) la bride d'ouverture (**2**) étant incorporée dans une vitre frontale (**12**) ou dans une paroi d'un boîtier (**10**) de l'enceinte (**1**) positionné dans un local d'installation (**19**);
b) une machinerie (**13**) destinée à traiter un article à traiter pouvant être prévue dans la chambre de travail (**11**);
c) le dispositif ganté (**4**) étant conçu comme un ensemble, qui peut être inséré de manière étanche aux gaz dans la bride d'ouverture (**2**) et qui se présente sous la forme d'un insert; et comprend:
da) une pièce de fixation (**40**) destinée à être fixée de manière étanche aux gaz à la bride d'ouverture (**2**);
db) un élément de scellement (**41**) disposé sur un côté et destiné à être ouvert ou à pouvoir être retiré;
dc) d'autre part une pièce de recouvrement (**7**) ou une pièce de blocage (**5**) qui peut être détachée de l'ensemble; et
dd) le gant (**3**), qui possède une surface intérieure (**43**) et une surface supérieure (**44**), étant fourré sous vide entre l'élément de scellement (**41**) et la pièce de recouvrement (**7**) ou la pièce de blocage (**5**), **caractérisé en ce que**
e) lorsque la pièce de recouvrement (**7**) ou la pièce de blocage (**5**) est en place sur le dispositif ganté (**4**) et que l'élément de scellement (**41**) est intact:
ea) un espace avant (**45**), dans lequel règne une dépression, est ménagé entre l'élément de scellement (**41**) et la surface (**44**) du gant (**3**); et
eb) l'espace avant (**45**) ainsi que la surface intérieure de l'élément de scellement (**41**) dirigé vers celui-ci et la surface (**44**) du gant (**3**) sont stériles.

2. Dispositif ganté (**4**) selon la revendication 1, **caractérisé en ce que**, lorsque la pièce de recouvrement (**7**) ou la pièce de blocage (**5**) est placée sur le dispositif ganté (**4**) et que l'élément de scellement (**41**) est intact:
a) un espace intérieur (**42**), dans lequel règne une dépression, est ménagé entre la surface intérieure (**43**) du gant (**3**) et la pièce de recouvrement (**7**) ou la pièce de blocage (**5**); et
b) l'espace intérieur (**42**) ainsi que la surface intérieure, dirigée vers celui-ci, de la pièce de recouvrement (**7**) ou de la pièce de blocage (**5**) et la surface intérieure (**43**) du gant (**3**) sont stériles.

3. Dispositif ganté (**4**) selon l'une au moins des revendications 1 et 2, **caractérisé en ce que**
a) l'extrémité réellement libre du gant (**3**) est fixée à la pièce de fixation (**40**) et/ou, à proximité de la pièce de fixation (**40**), à l'élément de scellement (**41**), l'élément de scellement (**41**) couvrant au moins sensiblement la largeur intérieure de la pièce de fixation (**40**); et
b) lorsque la pièce de recouvrement (**7**) ou la pièce de blocage (**5**) est posée sur le dispositif ganté (**4**) et que l'élément de scellement (**41**) est intact, l'élément de scellement (**41**) est visuellement reconnaissable comme étant incurvé de manière concave vers le dispositif ganté (**4**) en raison de la pression négative qui règne à l'intérieur.

4. Dispositif ganté (**4**) selon l'une au moins des revendications 1 à 3, **caractérisé en ce que**
a) la pièce de fixation (**40**) est annulaire ou ovale et est de préférence en matière synthétique; et
b) la pièce de recouvrement (**7**) ou la pièce de blocage (**5**) est de préférence conçue comme une coque et est de préférence en matière synthétique.

5. Dispositif ganté (**4**) selon l'une au moins des revendications 1 à 4, **caractérisé en ce qu'**une puce RFID (**46**), dans laquelle sont mémorisés un numéro de série individuel et de préférence également ses données de fabrication, est disposée dans la pièce de fixation (**40**).

6. Dispositif ganté (**4**) selon la revendication 5, **caractérisé en ce que** la puce RFID (**46**) est inscriptible et toutes les nouvelles actions sur le dispositif ganté (**4**), y compris sur le gant (**3**), sont enregistrées et ajoutées aux données d'historique individuelles du dispositif ganté (**4**) dans la puce RFID (**46**) ou dans l'unité de commande (**8**).

7. Dispositif ganté (**4**) selon l'une au moins des revendications 1 à 6, **caractérisé en ce que**
a) la pièce de blocage amovible (**5**) qui fait partie intégrante du dispositif ganté (**4**) et qui peut être détachée de celui-ci peut être utilisée pour la protection contre une intervention non autorisée avec le gant (**3**) dans la chambre de travail (**11**) de l'enceinte (**1**) par le biais de l'accès (**24**) prévu dans la bride d'ouverture (**2**); ou
b) une pièce de blocage (**5**) est prévue pour la protection contre une telle intervention non autorisée, laquelle pièce de blocage:
ba) est conçue comme un corps de fermeture qui est intégré directement dans la bride d'ouverture (**2**), qui est pivotant, qui peut être étiré, qui est en forme d'obturateur ou qui est extensible, ou
bb) est conçue comme un corps de fermeture séparé qui peut être arrimé à la bride d'ouverture (**2**) ou retiré de celle-ci.

8. Dispositif ganté (**4**) selon la revendication 7, **caractérisé en ce que** la pièce de blocage (**5**), qui fait partie intégrante du dispositif ganté (**4**) et qui peut être détachée de celui-ci, possède une extension (**58**) qui est destinée à coopérer avec un élément de retenue commutable (**28**) qui s'étend depuis la bride d'ouverture (**2**) afin de fixer temporairement la pièce de blocage (**5**) en plus à la bride d'ouverture (**2**).

9. Dispositif ganté (**4**) selon l'une au moins des revendications 1 à 8, **caractérisé en ce que**
a) la pièce de recouvrement (**7**) ou la pièce de blocage (**5**) possède une zone magnétique (**77**,**57**) qui est destinée à coopérer avec la pièce de fixation (**40**) afin de fixer temporairement en plus la pièce de recouvrement (**7**) ou la pièce de blocage (**5**);
b) la zone magnétique (**77**,**57**) peut également être utilisée lorsque la pièce de recouvrement (**7**) ou la pièce de blocage (**5**) est détachée du dispositif ganté (**4**) pour déposer celle-ci à une station de parcage (**15**).

10. Dispositif ganté (**4**) selon l'une au moins des revendications 1 à 9, **caractérisé en ce que**
a) dans le cas d'un grand nombre de brides d'ouverture (**2**) installées sur l'enceinte (**1**), un dispositif ganté (**4**) est fixé à la bride d'ouverture respective (**2**);
b) une unité d'acquisition (**62**), qui possède une liaison avec un microcontrôleur (**64**), est prévue pour recevoir des données personnelles d'un opérateur (**9**) afin de transmettre à un activateur (**69**), en cas de correspondance entre les données personnelles acquises et les données dans le microcontrôleur (**64**), une instruction de commutation selon laquelle la pièce de blocage (**5**) peut être amenée dans une position de blocage ou déplacée de celle-ci jusque dans une position ouverte et l'accès (**24**) est ainsi bloqué ou possible;
c) l'activateur (**69**) est disposé sur la bride d'ouverture (**2**) ou sur la pièce de blocage (**5**); et
d) les données du microcontrôleur (**64**) sont stockées directement à l'intérieur ou proviennent d'une unité de commande extérieure (**8**).

11. Dispositif ganté (**4**) selon la revendication 10, **caractérisé en ce que**
a) l'unité d'acquisition (**62**) destinée à recevoir des données personnelles de l'opérateur (**9**) est associée à la bride d'ouverture respective (**2**) ou à la pièce de blocage respective (**5**); et
b) en cas de correspondance entre les données personnelles acquises et les données dans le microcontrôleur (**64**), l'opérateur (**9**) reçoit du microcontrôleur (**64**), pour chaque instruction de commutation, l'autorisation de placer cette pièce de blocage déterminée (**5**) sur cette bride d'ouverture déterminée (**2**) et de l'amener dans la position de blocage ou de la déverrouiller et de la retirer de cette bride d'ouverture déterminée (**2**), de sorte que l'accès (**24**) est bloqué ou possible.

12. Dispositif ganté (**4**) selon l'une au moins des revendications 10 et 11, **caractérisé en ce que** l'unité d'acquisition (**62**) destinée à recevoir des données personnelles de l'opérateur (**9**) est prévue:
a) dans la bride d'ouverture respective (**2**); ou
b) dans la pièce de blocage respective (**5**); ou
c) pour toutes les brides d'ouverture concernées (**2**) et les pièces de blocage (**5**) de l'enceinte (**1**) dans un appareil mobile, par exemple une tablette électronique.

13. Dispositif ganté (**4**) selon l'une au moins des revendications 10 à 12, **caractérisé en ce que**
aa) la pièce de blocage (**5**), dans la configuration en tant que corps de fermeture intégré dans la bride d'ouverture (**2**), et la bride d'ouverture (**2**) sont chacune pourvues d'un capteur de sécurité (**21**,**66**;**66**,**21'**); et
ab) les deux paires de capteurs de sécurité (**21**,**66**;**66**,**21'**) servent, en coopération avec un relais de sécurité extérieur (**81**), à détecter la position de la pièce de blocage (**5**) dans la bride d'ouverture (**2**) et, lorsque la pièce de blocage (**5**) est ouverte, à commuter le blocage automatique de la machinerie (**13**); ou
ba) la pièce de blocage (**5**), dans la configuration en tant que corps de fermeture séparé qui peut être arrimé à la bride d'ouverture (**2**) ou retiré de celle-ci, et la bride d'ouverture (**2**) sont chacune pourvues d'un capteur de sécurité (**21**,**66**;**66**,**21'**); et
bb) les deux capteurs de sécurité (**21**,**66**:**66**,**21'**) servent, en coopération avec un relais de sécurité extérieur (**81**), à détecter la position de la pièce de blocage (**5**) par rapport à la bride d'ouverture (**2**) et, lorsque la pièce de blocage (**5**) s'écarte de la bride d'ouverture (**2**), à commuter sur un blocage automatique de la machinerie (**13**); ou
ca) la pièce de blocage (**5**), dans la configuration en tant que corps de fermeture qui est relié de manière amovible au dispositif ganté (**4**) et qui peut être verrouillé sur la bride d'ouverture (**2**) ou retiré de celle-ci, et la bride d'ouverture (**2**) sont chacune pourvues d'un capteur de sécurité (**21**,**66**;**66**,**21'**); et
cb) les deux paires de capteurs de sécurité (**21**,**66**;**66**,**21'**) servent, en coopération avec un relais de sécurité extérieur (**81**), à détecter la position de la pièce de blocage (**5**) par rapport à la bride d'ouverture (**2**) et, lorsque la pièce de blocage (**5**) s'écarte de la bride d'ouverture (**2**), à commuter sur un blocage automatique de la machinerie (**13**).

14. Dispositif ganté (**4**) selon la revendication 13, **caractérisé en ce que**
a) un émetteur/récepteur (**80**) est associé à l'unité de commande (8) et au relais de sécurité (**81**) coopérant avec celle-ci pour chaque bride d'ouverture (**2**); et
b) le capteur de sécurité actif (**21'**) dans la bride d'ouverture (**2**) ou dans la pièce de blocage (**5**) sert à détecter si le capteur de sécurité passif complémentaire (**66**) est présent, un élément émetteur/récepteur (**65**) signalant une non-présence du capteur de sécurité passif (**66**) sans fil à l'émetteur/récepteur (**80**), l'émetteur/récepteur (**80**) transmettant alors la non-présence du capteur de sécurité passif (**66**) au relais de sécurité (**81**) et bloquant automatiquement la machinerie (**13**).

15. Dispositif ganté (**4**) selon l'une au moins des revendications 10 à 14, **caractérisé en ce que** la pièce de blocage (**5**), dans la configuration en tant que corps de fermeture séparé pouvant être arrimé à la bride d'ouverture (**2**) ou retiré de celle-ci, ou la bride d'ouverture (**2**) est pourvue:
a) de l'unité d'acquisition (**62**);
b) du microcontrôleur (**64**); et
c) d'un actionneur (**69**) qui peut être actionné manuellement ou par entraînement et qui sert à déplacer la pièce de blocage (**5**) jusque dans la position bloquée ou ouverte ; et éventuellement:
d) d'un affichage (**61**) et d'une batterie (**60**).

16. Dispositif ganté (**4**) selon la revendication 14, **caractérisé en ce que**
a) la bride d'ouverture (**2**) possède une puce RFID (**22**); et
b) la pièce de blocage (**5**), dans la configuration en tant que corps de fermeture séparé pouvant être arrimé à la bride d'ouverture (**2**) ou retiré de celle-ci, est pourvue de l'élément émetteur/récepteur (**65**);
c) l'élément émetteur/récepteur (**65**) servant à détecter cet accouplement lorsque la pièce de blocage (**5**) est placée sur la bride d'ouverture (**2**) et, selon les données stockées dans l'unité de commande (**8**) ou dans le microcontrôleur (**64**), à autoriser ou non le verrouillage de la pièce de blocage (**5**).

17. Dispositif ganté (**4**) selon l'une au moins des revendications 14 à 16, **caractérisé en ce que**
a) les données mémorisées dans la puce RFID (**46**) qui est disposée dans la pièce de fixation (**40**) peuvent être lues au moyen de l'élément émetteur/récepteur (**65**) et stockées dans l'unité de commande (**8**) et/ou dans le microcontrôleur (**64**); et
b) chaque nouvelle action sur la bride d'ouverture (**2**) et sur le dispositif ganté (**4**) est détectée par l'unité de commande (**8**) et est stockée pour le dispositif ganté concerné (**4**), c'est-à-dire qu'elle est ajoutée aux données d'historique individuelles.

18. Dispositif ganté (**4**) selon l'une au moins des revendications 5 à 17, **caractérisé en ce que**
a) les données de fabrication de chaque dispositif ganté (**4**) peuvent comprendre:
aa) le numéro de série individuel;
ab) la date de fabrication;
ac) la taille des gants;
ad) le type de matière;
ae) le procédé de stérilisation utilisé;
af) la date d'utilisation maximale; et
b) les données d'historique de chaque dispositif ganté (**4**) peuvent comprendre:
ba) la date d'installation dans une bride d'ouverture (**2**);
bb) les données personnelles de l'installateur;
bc) l'identifiant de la bride d'ouverture (**2**) sur laquelle l'installation a été effectuée;
bd) quand, combien de fois et par quel opérateur (**9**) la pièce de blocage (**5**) sur le dispositif ganté concerné (**4**) a été amenée dans la position bloquée ou déplacée de celle-ci jusque dans la position ouverte;
be) l'instant et le comptage du nombre de cycles de décontamination sur la chambre de travail (**11**) de l'enceinte (**1**) et du nombre maximum admissible de cycles de décontamination;
bf) l'instant et le nombre de tests d'étanchéité effectués sur le dispositif ganté concerné (**4**);
bg) les lots et produits qui sont manipulés dans la chambre de travail (**11**) de l'enceinte (**1**) et pour lesquels le dispositif ganté concerné (**4**) est utilisé;
bh) les événements particuliers que l'opérateur (**9**) doit entrer manuellement; et
bi) les données personnelles de l'installateur qui effectue le démontage et l'élimination du dispositif ganté concerné (**4**).

19. Dispositif ganté (**4**) selon l'une au moins des revendications 10 à 18, **caractérisé en ce que**
a) l'unité d'acquisition (**62**) est destinée à recevoir des identifiants biométriques de l'opérateur (**9**), un code que doit entrer l'opérateur (**9**) ou les données électroniques d'un support de données que doit présenter l'opérateur (**9**); et
b) l'identifiant reçu de l'opérateur (**9**) par l'unité d'acquisition (**62**), en coopération avec le microcontrôleur (**64**), accorde ou sinon refuse à l'opérateur (**9**) qui souhaite être actif, en fonction des données stockées dans le microcontrôleur (**64**) ou des données obtenues par le biais de l'unité de commande (**8**), l'autorisation de déplacer la pièce de blocage (**5**) jusque dans position bloquée ou ouverte sur la bride d'ouverture concernée (**2**).
